(19) Europäisches Patentamt / European Patent Office / Office européen des brevets

(11) **EP 4 299 284 B1**

(12) **EUROPEAN PATENT SPECIFICATION**

(45) Date of publication and mention
of the grant of the patent:
**17.06.2026 Bulletin 2026/25**

(21) Application number: **22759184.9**

(22) Date of filing: **21.01.2022**

(51) International Patent Classification (IPC):
*B29C 61/08* (2006.01)   *B29C 61/02* (2006.01)
*H01B 17/58* (2006.01)   *H01B 19/00* (2006.01)
*H02G 15/18* (2006.01)   *B29K 27/12* (2006.01)
*B29K 105/02* (2006.01)   *B29L 23/00* (2006.01)
*B29K 23/00* (2006.01)   *H02G 1/14* (2006.01)

(52) Cooperative Patent Classification (CPC):
**H01B 19/00; B29C 61/02; B29C 61/08;**
**H02G 15/1806;** B29K 2023/08; B29K 2027/12;
B29K 2105/02; B29L 2023/00; H02G 1/14

(86) International application number:
**PCT/JP2022/002302**

(87) International publication number:
**WO 2022/181142 (01.09.2022 Gazette 2022/35)**

(54) **HEAT-SHRINKABLE TUBING, HEAT-SHRINKABLE COUPLING COMPONENT, PRODUCTION METHOD FOR HEAT-SHRINKABLE TUBING, AND PRODUCTION METHOD FOR HEAT-SHRINKABLE COUPLING COMPONENT**

WÄRMESCHRUMPFBARER SCHLAUCH, WÄRMESCHRUMPFBARE KOPPLUNGSKOMPONENTE, HERSTELLUNGSVERFAHREN FÜR WÄRMESCHRUMPFBAREN SCHLAUCH UND HERSTELLUNGSVERFAHREN FÜR WÄRMESCHRUMPFBARE KOPPLUNGSKOMPONENTE

TUBE THERMORÉTRACTABLE, COMPOSANT DE COUPLAGE THERMORÉTRACTABLE, PROCÉDÉ DE PRODUCTION DE TUBE THERMORÉTRACTABLE, ET PROCÉDÉ DE PRODUCTION POUR COMPOSANT DE COUPLAGE THERMORÉTRACTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2021 JP 2021027985**

(43) Date of publication of application:
**03.01.2024 Bulletin 2024/01**

(73) Proprietors:
• **Sumitomo Electric Fine Polymer, Inc.**
**Sennan-gun, Osaka 590-0458 (JP)**
• **SUMITOMO ELECTRIC INDUSTRIES, LTD.**
**Osaka-shi, Osaka 541-0041 (JP)**

(72) Inventors:
• **ISHIBASHI, Keiji**
**Sennan-gun, Osaka 590-0458 (JP)**

• **MURATA, Seiichirou**
**Sennan-gun, Osaka 590-0458 (JP)**
• **FUKUMOTO, Ryota**
**Osaka-shi, Osaka 541-0041 (JP)**

(74) Representative: **Boult Wade Tennant LLP**
**Salisbury Square House**
**8 Salisbury Square**
**London EC4Y 8AP (GB)**

(56) References cited:
EP-A1- 3 715 115   WO-A1-2019/097820
WO-A1-2023/140035   CN-A- 106 317 598
CN-A- 106 700 218   CN-A- 109 337 188
JP-A- 2017 213 794   JP-A- H0 733 938
JP-A- H05 325 692   JP-B2- 5 559 561

## Description

Technical Field

The present invention relates to a heat shrinkable tube, a heat shrinkable coupling component, a method of manufacturing a heat shrinkable tube, and a method of manufacturing a heat shrinkable coupling component.
The present application claims priority from Japanese Patent Application No. 2021-27985 filed on February 24, 2021.

Background Art

An electric wire bundle prepared by binding a plurality of insulated wires using a connecting strip, an adhesive tape, etc. is used as a wire harness for an aircraft, an electronic component, a railroad car, an automobile, or a motorcycle. Generally, each of the insulated wires is formed by covering, with an insulating material, a bundle of one or a plurality of strands made of a conductor such as a copper alloy. Since the strands are exposed at a coupling portion (joint portion) at an end or an intermediate portion of the electric wire bundle, it is necessary to provide electrical insulation, mechanical protection, and waterproofness for the coupling portion. To provide the electrical insulation, mechanical protection, and waterproofness, a heat shrinkable tube is used. In particular, to provide the waterproofness, a heat shrinkable coupling component including a heat shrinkable tube that is heat shrinkable in its radial direction is used. When a coupling portion between insulated wires is covered with the heat shrinkable coupling component and heated, the heat shrinkable tube included in the heat shrinkable coupling component shrinks so as to conform to the shape of the coupling portion and comes into close contact with the coupling portion due to the shape memory effect, and the coupling portion of the electric wires, pipes, etc. can thereby be protected.
Polytetrafluoroethylene (PTFE) has good heat resistance, high mechanical strength, etc., can provide a low coefficient of friction, and is therefore preferably used as the material of the above heat shrinkable tube. However, the formability of PTFE is low because of its high storage elastic modulus. Therefore, in one previously proposed technique, a PTFE tube is crosslinked by irradiation with radioactive rays to improve its formability (see PTL 1). Polyvinylidene fluoride (PVDF) having a low melting point and good formability has also been widely used as the material of the heat shrinkable tube. EP3715115A1 relates to a heat-resistant bilaminar heat-shrinkable tube and method for covering to-be-covered object.

Citation List

Patent Literature

PTL 1: International Publication No. WO 2010/038800

Summary of Invention

A heat shrinkable tube according to one aspect of the present invention is according to claim 1.
A heat shrinkable tube manufacturing method according to another aspect of the present invention is a method of manufacturing a heat shrinkable tube according to claim 12.

Brief Description of Drawings

[Fig. 1] Figure 1 is a schematic perspective view showing a heat shrinkable tube according to one embodiment of the present invention.
[Fig. 2] Figure 2 is a schematic perspective view showing a heat shrinkable coupling component according to the one embodiment of the present invention.
[Fig. 3] Figure 3 is a schematic perspective view showing a heat shrinkable coupling component according to another embodiment of the present invention.
[Fig. 4] Figure 4 is a schematic perspective view showing a heat shrinkable coupling component according to another embodiment of the present invention.
[Fig. 5] Figure 5 is a schematic perspective view showing a heat shrinkable coupling component according to another embodiment of the present invention.
[Fig. 6] Figure 6 is a schematic perspective view showing a heat shrinkable coupling component according to another embodiment of the present invention.

[Fig. 7] Figure 7 is a schematic illustration illustrating a state before exposed conductors of two insulated wires are inserted into the heat shrinkable coupling component according to the one embodiment of the present invention.

[Fig. 8] Figure 8 is a schematic illustration illustrating a state in which a coupling portion of the two insulated wires is covered with the heat shrinkable coupling component according to the one embodiment of the present invention.

[Fig. 9] Figure 9 is a schematic illustration illustrating a state in which heat shrinkage of the heat shrinkable coupling component according to the one embodiment of the present invention has started.

[Fig. 10] Figure 10 is a schematic illustration illustrating a state in which a sealer in the heat shrinkable coupling component according to the one embodiment of the present invention has melted.

[Fig. 11] Figure 11 is a schematic illustration illustrating a state in which a solder material in the heat shrinkable coupling component according to the one embodiment of the present invention has melted.

Description of Embodiments

[Problems to be Solved by Present Invention]

PTFE has a very high melting point of 327°C, and therefore the insulating layer of a high heat resistant insulated wire that contains an ethylene-tetrafluoroethylene copolymer, silicon, etc. may be easily damaged during shrinkage of the heat shrinkable tube. A heat shrinkable coupling component for insulated wires is not only used to protect the coupling portion of the insulated wires but is also required to have high waterproof for preventing water from entering the coupling portion from the outside. The heat shrinkable tube shrinks at a temperature higher than its melting point. Therefore, when PVDF having a melting point of 160°C is used, it is feared that its reliability will be insufficient in applications that require heat resistance at higher temperature. As described above, the heat shrinkable tube used for the heat shrinkable coupling component designed for high heat resistance grade insulated wires is required to have high heat resistance and high waterproof performance and to be heat shrinkable without thermally damaging the insulated wires to be covered.

The present invention has been made in view of the foregoing circumstances, and it is an object of the present invention to provide a heat shrinkable tube having good heat resistance and good heat shrinkage performance and usable for a heat shrinkable coupling component for high heat resistant insulated wires.

[Advantageous Effects of Present Invention]

The present invention can provide a heat shrinkable tube having good heat resistance and good heat shrinkage performance and usable for a heat shrinkable coupling component for high heat resistant insulated wires.

[Description of Embodiments of Present Invention]

First, embodiments of the present invention will be enumerated and described.

A heat shrinkable tube according to one aspect of the present invention is according to claim 1.

The heat shrinkable tube contains the ethylene-tetrafluoroethylene copolymer as a main component, and therefore the melting point of the heat shrinkable tube and its storage elastic modulus at a temperature equal to or higher than its melting point can be easily controlled. Since the melting point of the heat shrinkable tube is 210°C to 250°C, sufficient heat resistance can be obtained, and heat damage to objects to be covered can be reduced. Moreover, since the storage elastic modulus at 250°C to 280°C is 0.8 MPa to 2.8 MPa, the heat shrinkable tube has good deformability when heated to a temperature equal to or higher than the melting point and therefore can be easily expanded (increased in diameter) during the manufacturing process. Moreover, the concentricity (the wall thickness distribution) of the tube and its Longitudinal change after shrinkage of the tube can be controlled within preferable ranges. Moreover, the shrinkage performance of the tube that allows the tube to shrink to its original shape is high, and the degree of shrinkage of the tube in its lengthwise direction is uniform, so that the end surface inclination of the tube after shrinkage can be reduced. Therefore, the heat shrinkable tube exhibits good heat resistance and good heat shrinkage performance when used for heat shrinkable coupling components for high heat resistant insulated wires including an insulating layer containing an ethylene-tetrafluoroethylene copolymer, silicon, etc. The heat shrinkable tube of the present invention is a single-layer tube whose concentricity and Longitudinal change can be controlled within preferred ranges. Therefore, with this heat shrinkable tube, unlike with a conventional two-layer type heat shrinkable tube including an inner flowable adhesive layer, the formation of a gap between the heat shrinkable tube and an object to be covered can be reduced, and good shrinkability can be achieved without causing problems in manufacturing efficiency and cost.

The "main component" of the heat shrinkable tube means a component with the highest content and is a component contained in an amount of 95% by mass or more with respect to the total mass of the heat shrinkable tube and contained in an amount of 98% by mass or more with respect to the total mass of resin components. The "storage elastic modulus" is a value measured according to a test method for dynamic mechanical properties described in JIS-K7244-4 (1999) and is a value measured using a viscoelasticity measurement apparatus in a tensile mode under the condition of a strain of 0.08% at the temperature and frequency described above. The viscoelasticity measurement apparatus used may be, for example, "DVA-220" manufactured by IT Keisoku Seigyo Co., Ltd.

In the heat shrinkable tube, the content of fluorine in the ethylene-tetrafluoroethylene copolymer is preferably 58% by mass to 62% by mass. When the content of fluorine in the ethylene-tetrafluoroethylene copolymer is in the above range, the melting point of the heat shrinkable tube and its storage elastic modulus at a temperature equal to or higher than the melting point can be controlled within appropriate ranges.

The ratio n/m of the number n of tetrafluoroethylene units to the number m of ethylene units in the ethylene-tetrafluoroethylene copolymer is 1.02 to 1.20. When the ratio n/m of the number n of tetrafluoroethylene units to the number m of ethylene units in the ethylene-tetrafluoroethylene copolymer is in the above range, the melting point of the heat shrinkable tube and its storage elastic modulus at a temperature equal to or higher than the melting point can be controlled within appropriate ranges.

In the heat shrinkable tube, its storage elastic modulus at 25°C is preferably 500 MPa to 900 MPa. When the storage elastic modulus at 25°C is within the above range, the strength and flexibility of a heat shrinkable coupling component that uses the heat shrinkable tube can be maintained in preferred ranges.

The arithmetic average roughness Ra of the surface is preferably 0.1 $\mu$m to 2.0 $\mu$m. The arithmetic average roughness Ra within the above range allows good visibility through the heat shrinkable tube, and the absorbability of infrared light during infrared (IR) heating in a process of manufacturing the heat shrinkable tube can be improved. The arithmetic average roughness Ra is a value measured according to JIS-B0601 (2013).

In the heat shrinkable tube, the transmittance of infrared light having a wavelength of 1 $\mu$m is preferably 90.0% to 99.0%. When the transmittance of the infrared light is within the above range, the efficiency of heating in the process of manufacturing the heat shrinkable tube can be improved. Moreover, the shrinkage behavior of the heat shrinkable coupling component using the heat shrinkable tube can be improved. In a method of measuring the transmittance of infrared light, a spectrophotometer UV-3600 manufactured by Shimadzu Corporation may be used to measure the transmittance of infrared light having a wavelength of 1 $\mu$m.

A heat shrinkable coupling component in another aspect of the present invention is a heat shrinkable coupling component used to couple insulated wires each including a strand covered with an insulating layer. The heat shrinkable coupling component includes the heat shrinkable tube and a pair of sealing portions disposed on the inner circumferential surface of the heat shrinkable tube at respective positions on opposite end side. Since the heat shrinkable coupling component includes the heat shrinkable tube, the shrinkage performance, sealing ability, and heat resistance of the heat shrinkable coupling component are good.

The shear viscosity of a sealer forming the sealing portions at 250°C and a shear rate of 100/s is preferably 1000 Pa·s to 2000 Pa·s. When the shear viscosity at 250°C and a shear rate of 100/s is 1000 Pa·s to 2000 Pa·s, gaps are unlikely to be formed during shrinkage of the heat shrinkable tube, and the sealing ability of the heat shrinkable coupling component can be improved. In a method of measuring the shear viscosity, a rotary rheometer ("MCR302" manufactured by Anton Paar) is used to evaluate the shear viscosity at the predetermined temperature and the predetermined shear rate.

The shear viscosity of the sealer forming the sealing portions at 215°C and a shear rate of 0.01/s is preferably 7000 Pa·s to 70000 Pa·s. When the shear viscosity of the sealer forming the sealing portions at 215°C and a shear rate of 0.01/s is 7000 Pa·s to 70000 Pa·s, the sealer has appropriate flowability, and the sealing ability can be improved.

Preferably, the heat shrinkable coupling component further includes a solder portion disposed on the inner circumferential surface of the heat shrinkable tube at a position between the pair of sealing portions. When the heat shrinkable coupling component further includes the solder portion disposed on the inner circumferential surface of the heat shrinkable tube at the position between the pair of sealing portions, the connectivity of the insulated wires can be further improved.

In the heat shrinkable coupling component, it is preferable that the melting point of a solder material forming the solder portion is 210°C to 240°C and that the softening point of the sealer is 80°C to 170°C. When the melting point of the solder material and the softening point of the sealer are within the above ranges, the combination of the heat shrinkable tube, the solder material, and the sealer can improve the heat resistance and sealing ability of the heat shrinkable coupling component and the connectivity of insulated wires. The "softening point" of the sealer is the temperature at which the thickness of the sealer is reduced to 50% when the sealer is heated while pressurized at a pressure of 5 kPa using a thermo-mechanical analysis apparatus.

The melting point of the sealer is preferably 110°C to 170°C. When the melting point of the sealer is 110°C to 170°C, the sealer has higher flowability, and its effect of filling gaps is further improved, so that the sealing ability can be further improved.

In the heat shrinkable coupling component, the transmittance of infrared light having a wavelength of 1 $\mu$m through the sealer is preferably 1.0% to 30.0%. When the transmittance of infrared light having a wavelength of 1 $\mu$m through the sealer is within the above range, the absorbability of infrared light during infrared heating of the heat shrinkable coupling component can be improved, and the heat shrinkable coupling component can exhibit good heat shrinkage behavior.

A heat shrinkable tube manufacturing method according to another aspect of the present invention is a method of manufacturing a heat shrinkable tube according to claim 12. With this heat shrinkable tube manufacturing method, a heat shrinkable tube that has high heat resistance and high heat shrinkage performance and can be used for heat shrinkable coupling components for high heat resistant insulated wires can be manufactured.

A heat shrinkable coupling component manufacturing method according to another aspect of the present invention includes: disposing sealing portions on an inner circumferential surface of the heat shrinkable tube at respective positions on opposite end sides; and fixing the sealing portions by shrinking the heat shrinkable tube, wherein the sealing portions are formed of a sealer having a softening point of 80°C to 170°C. As described above, this heat shrinkable coupling component manufacturing method includes: disposing the pair of sealing portions on the inner circumferential surface of the heat shrinkable tube at their respective positions on the opposite end sides; and fixing the sealing portions by shrinking the heat shrinkable tube, and the sealing portions are formed of the sealer having a softening point of 80°C to 170°C. Therefore, with this heat shrinkable coupling component manufacturing method, a heat shrinkable coupling component having good shrinkage performance, good sealing ability, and good heat resistance can be easily manufactured.

[Details of Embodiments of the Present Invention]

A heat shrinkable tube according to one embodiment of the present invention will be described in detail with reference to the drawings as appropriate.

<Heat shrinkable tube>

The heat shrinkable tube according to the embodiment of the present invention is used as a covering material for protecting an object to be covered. The heat shrinkable tube is a tube that is reduced in diameter when heated. More specifically, the heat shrinkable tube into which an object to be covered has been inserted is heated on the object to be covered, and the object to be covered is thereby covered with the shrunk heat shrinkable tube, so that the covered object is protected.

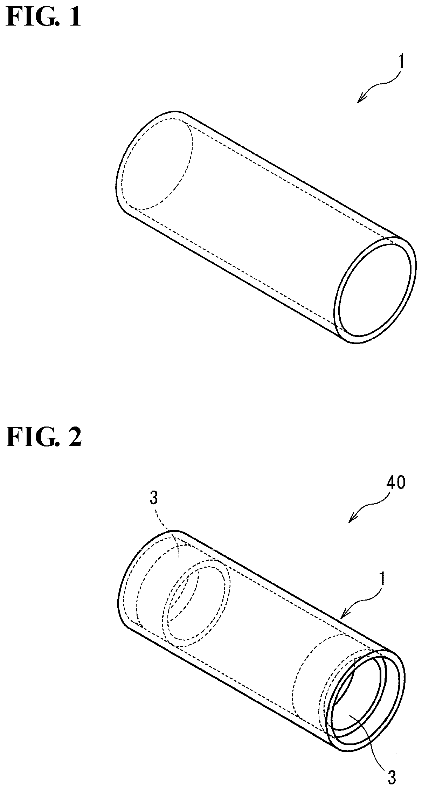

A heat shrinkable tube 1 in Fig. 1 includes a tubular single substrate layer. The heat shrinkable tube 1 is used, for example, as a covering for protection, insulation, waterproofing, corrosion protection, etc. of a coupling portion between objects to be covered, a terminal end of an electric wire, a metal tube, etc. The heat shrinkable tube 1 is formed of a heat shrinkable tube-forming resin composition, and the main component of the heat shrinkable tube 1 is an ethylene-tetrafluoroethylene copolymer. Since the main component of the heat shrinkable tube 1 is the ethylene-tetrafluoroethylene copolymer, the melting point of the heat shrinkable tube 1 and its storage elastic modulus at a temperature equal to or higher than the melting point can be easily controlled.

The lower limit of the content of fluorine in the ethylene-tetrafluoroethylene copolymer is 58% by mass and preferably 59% by mass. The upper limit of the content of fluorine is 62% by mass and preferably 61% by mass. If the content of fluorine is lower than the above lower limit, the melting point of the heat shrinkable tube 1 is high, and the storage elastic modulus at a temperature equal to or higher than the melting point may decrease. If the content of fluorine exceeds the above upper limit, the melting point of the heat shrinkable tube 1 is low, and the storage elastic modulus at a temperature equal to or higher than the melting point may be excessively high. When the content of fluorine is within the above range, the melting point of the heat shrinkable tube and its storage elastic modulus at a temperature equal to or higher than the melting point can be controlled within appropriate ranges. The content of fluorine can be measured by gas ion chromatography analysis.

The lower limit of the ratio $n/m$ of the number $n$ of tetrafluoroethylene units to the number $m$ of ethylene units in the ethylene-tetrafluoroethylene copolymer is 1.02, preferably 1.03, and more preferably 1.04. The upper limit of the ratio $n/m$ of the number $n$ of tetrafluoroethylene units to the number $m$ of ethylene units is 1.20, preferably 1.15, and more preferably 1.12. If the ratio $n/m$ of the number $n$ of tetrafluoroethylene units to the number $m$ of ethylene units is lower than the above lower limit, the melting point of the heat shrinkable tube 1 is high, and the storage elastic modulus at a temperature equal to or higher than the melting point may decrease. If the ratio $n/m$ of the number $n$ of tetrafluoroethylene units to the number $m$ of ethylene units exceeds the above upper limit, the melting point of the heat shrinkable tube 1 is low, and the storage elastic modulus at a temperature equal to or higher than the melting point may be excessively high. When the ratio $n/m$ of the number $n$ of tetrafluoroethylene units to the number $m$ of ethylene units is within the above range, the melting point of the heat shrinkable tube and its storage elastic modulus at a temperature equal to or higher than the melting point can be controlled within appropriate ranges.

The lower limit of the storage elastic modulus of the heat shrinkable tube 1 at 250°C to 280°C is 0.8 MPa, preferably 1.0 MPa, and more preferably 1.2 MPa. The upper limit of the storage elastic modulus is 2.8 MPa, preferably 2.0 MPa, and more preferably 1.6 MPa. If the storage elastic modulus at 250°C to 280°C is lower than the above lower limit, the strength of the heat shrinkable tube 1 at high temperature and its shrinkage performance (shape memory effect) may be insufficient. If the storage elastic modulus exceeds the above upper limit, the tube is not easily expanded, and it may be difficult to reduce variations in the quality of the heat shrinkable tube 1. Moreover, the concentricity during expansion is poor, and the value of the Longitudinal change of the heat shrinkable tube after shrinkage and its variations may become large. When the storage elastic modulus of the heat shrinkable tube is within the above range, the heat shrinkable tube 1 exhibits good deformability when heated to its melting point or higher and can be easily and reliably increased in diameter during the manufacturing process. Therefore, variations in quality can be reduced.

The lower limit of the storage elastic modulus of the heat shrinkable tube 1 at 25°C is preferably 500 MPa, more preferably 550 MPa, and still more preferably 600 MPa. The upper limit of the storage elastic modulus at 25°C is preferably 900 MPa, more preferably 850 MPa, and still more preferably 800 MPa. If the storage elastic modulus at 25°C is lower than the above lower limit, the strength of a heat shrinkable coupling component that uses the heat shrinkable tube 1 may be insufficient, so that the heat shrinkable coupling component may be easily damaged. If the storage elastic modulus at 25°C exceeds the above upper limit, the flexibility of the heat shrinkable coupling component may be low, and the heat shrinkable coupling component may easily break during assembly. In the heat shrinkable coupling component, the heat shrinkable tube used is required to be a semi-rigid tube in order to maintain its shape when the heat shrinkable coupling component is handled during assembly, shrinkage, etc. When the storage elastic modulus of the heat shrinkable tube 1 at 25°C is within the above range, the strength and flexibility of the heat shrinkable coupling component that uses the heat shrinkable tube 1 can be maintained within preferred ranges.

The lower limit of the melting point of the heat shrinkable tube 1 is 210°C and more preferably 215°C. If the melting point of the heat shrinkable tube 1 is lower than the above lower limit, the heat shrinkable tube may be softened or deformed during use at high temperature. The upper limit of the melting point of the heat shrinkable tube 1 is 250°C and more preferably 240°C. If the melting point of the heat shrinkable tube 1 exceeds the above upper limit, the shrinkage temperature of the manufactured heat shrinkable tube 1 when it is heat-shrunk is high, so that an object to be covered may be damaged. When the melting point of the heat shrinkable tube is within the above range, high heat resistance can be obtained, and thermal damage to the object to be covered can be reduced.

The lower limit of the arithmetic average roughness Ra of the surface of the heat shrinkable tube 1 is preferably 0.1 μm, more preferably 0.3 μm, and still more preferably 0.5 μm. If the arithmetic average roughness Ra of the surface of the heat shrinkable tube 1 is less than the above lower limit, the absorption of heat when the heat shrinkable tube 1 is heated using an infrared heating apparatus is small, and the heating may be insufficient. The upper limit of the arithmetic average roughness Ra is preferably 2.0 μm or lower, more preferably 1.5 μm, and still more preferably 1.0 μm. If the arithmetic average roughness Ra of the surface of the heat shrinkable tube 1 exceeds the above upper limit, scattering of visible light is large, and the visibility through the heat shrinkable tube 1 is low, so that it may be difficult to check the degree of shrinkage of a heat shrinkable coupling component including the heat shrinkable tube 1. In the heat shrinkable coupling component for insulated wires, it is necessary that the visibility through the heat shrinkable tube 1 be high in order to check its shrinkage state, fusion of the solder material, the coupling state of the electric wires, etc. Therefore, the heat shrinkable tube used for the heat shrinkable coupling component is required to have transparency. In the heat shrinkable tube 1, since the arithmetic average roughness Ra is within the above range, high visibility through the heat shrinkable tube 1 can be obtained, and infrared absorption during infrared (IR) heating in the process of manufacturing the heat shrinkable tube 1 can be improved.

In the heat shrinkable tube 1, the lower limit of the transmittance of infrared light having a wavelength of 1 μm is preferably 90.0% and more preferably 92%. If the transmittance of infrared light through the heat shrinkable tube 1 is less than the above lower limit, the heat shrinkable tube 1 is preferentially heated during shrinkage of the heat shrinkable coupling component using the heat shrinkable tube 1, and the heating of the inside of the heat shrinkable coupling component may be insufficient. The upper limit of the transmittance of infrared light is preferably 99.0% and more preferably 97%. If the transmittance of infrared light exceeds the above upper limit, the heating efficiency when the heat shrinkable tube 1 is subjected to infrared heating may decrease. In the heat shrinkable tube 1, since the transmittance of infrared light having a wavelength of 1 μm is within the above range, the heating efficiency in the process of manufacturing the heat shrinkable tube 1 is high, and the heat shrinkable coupling component that uses the heat shrinkable tube 1 can exhibit good shrinkage behavior.

The average inner diameter and average thickness of the heat shrinkable tube 1 are appropriately selected according to its application etc. The average inner diameter of the heat shrinkable tube 1 before heat shrinkage is, for example, 1 mm to 60 mm. The average inner diameter of the heat shrinkable tube 1 after heat shrinkage may be, for example, 25% to 65% of the average inner diameter before heat shrinkage. The average thickness of the heat shrinkable tube 1 may be, for example, 0.1 mm to 5 mm.

Preferably, the heat shrinkable tube 1 contains substantially no inorganic materials. The phrase "contains substantially no inorganic materials" means that inorganic materials serving as fillers are not contained. The heat shrinkable tube 1 may contain a small amount of inorganic materials as unavoidable impurities. The content of the inorganic impurities in the heat shrinkable tube 1 is, for example, 5% by mass or less and more preferably 1% by mass or less.

The heat shrinkable tube 1 may optionally contain additional additives. Examples of such additives include a strength retention aid, an antioxidant, a flame retardant, a copper inhibitor, a crosslinking aid, a coloring agent, a thermal stabilizer, an infrared absorber, and an ultraviolet absorber. The content of the additives in the heat shrinkable tube 1 is preferably less than 5% by mass and more preferably less than 3% by mass. If the content of the additives is equal to or more than the above upper limit, variations in the performance of the heat shrinkable tube 1 are likely to occur.

The above heat shrinkable tube provided has high heat resistance and high heat shrinkage performance and can be used for heat shrinkable coupling components for high heat resistance insulated wires. The heat shrinkable tube can be preferably used, for example, for protection, insulation, waterproofing, corrosion protection, etc. of wires such as insulated wire and cables. Specifically, the heat shrinkable tube can be applied to a wire splice and a wire harness. The heat shrinkable tube, a solder material, and a sealer may be combined and used as a heat shrinkable coupling component. The heat shrinkable tube may be combined with an adhesive layer and a crimp sleeve and used to form a crimped terminal.

<Heat shrinkable coupling component >

The heat shrinkable coupling component is used to couple insulated wires each including strands covered with an insulating layer. Figure 2 is a schematic perspective view showing a heat shrinkable coupling component according to the one embodiment of the present invention. As shown in Fig. 2, the heat shrinkable coupling component 40 includes the heat shrinkable tube 1 and a pair of sealing portions 3 disposed on the inner circumferential surface of the heat shrinkable tube 1 at respective positions on opposite end sides. The sealing portions 3 are formed of a sealer. Since the heat shrinkable coupling component 40 includes the heat shrinkable tube 1, the heat shrinkable coupling component has good shrinkage performance, good sealing ability, and high heat resistance.

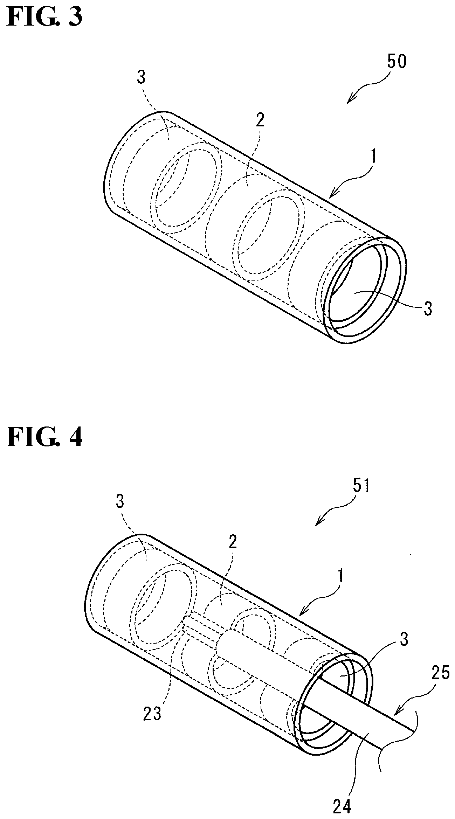

Preferably, the heat shrinkable coupling component further includes a solder portion disposed on the inner circumferential surface of the heat shrinkable tube at a position between the pair of sealing portions. When the heat shrinkable coupling component further includes the solder portion disposed on the inner circumferential surface of the heat shrinkable tube at the position between the pair of sealing portions, the connectivity of the insulated wires can be further improved. A heat shrinkable coupling component 50 shown in Fig. 3 includes: the heat shrinkable tube 1; a pair of sealing portions 3 disposed on the inner circumferential surface of the heat shrinkable tube 1 at respective positions on opposite end sides; and a solder portion 2 disposed on the inner circumferential surface of the heat shrinkable tube 1 at a position between the pair of sealing portions 3. The solder portion 2 is formed of a solder material.

The heat shrinkable coupling component may include a grounding insulated wire. A heat shrinkable coupling component 51 shown in Fig. 4 includes: the heat shrinkable tube 1; the pair of sealing portions 3 disposed on the inner circumferential surface of the heat shrinkable tube 1 at respective positions on opposite end sides; the solder portion 2 disposed on the inner circumferential surface of the heat shrinkable tube 1 at a position between the pair of sealing portions 3; and a grounding insulated wire 25. The grounding insulated wire 25 includes strands 23 and an insulating layer 24 that covers the strands 23. Since the heat shrinkable coupling component 51 includes the grounding insulated wire 25, the heat shrinkable coupling component 51 can be easily grounded. The insulating covering portion of the grounding insulated wire may be a resin or a braid.

In the heat shrinkable coupling component, the lower limit of the shear viscosity of the sealer at 250°C and a shear rate of 100/s is preferably 1000 Pa·s, more preferably 1100 Pa·s, and still more preferably 1200 Pa·s. If the shear viscosity of the sealer at 250°C and a shear rate of 100/s is lower than 1000 Pa·s, the sealer is softened and easily deformed during shrinkage of the heat shrinkable tube. In this case, a gap tends to be formed, and the sealing ability may deteriorate. The upper limit of the shear viscosity of the sealer at 250°C and a shear rate of 100/s is preferably 2000 Pa·s, more preferably 1900 Pa·s, and still more preferably 1800 Pa·s. If the shear viscosity of the sealer at 250°C and a shear rate of 100/s is higher than 2000 Pa·s, the flowability of the sealer during shrinkage of the heat shrinkable tube is low. In this case, the effect of filling gaps is low, and the sealing ability may deteriorate.

In the heat shrinkable coupling component, the shear viscosity of the sealer at 250°C and a shear rate of 0.01/s is preferably 3000 Pa·s to 40000 Pa·s. If the shear viscosity at 250°C and a shear rate of 0.01/s is lower than 3000 Pa·s, the sealer tends to flow when the heat shrinkable coupling component is stored at high temperature for a long time, and it may be difficult to maintain the sealing ability. If the shear viscosity at 250°C and a shear rate of 0.01/s is higher than 40000 Pa·s, the flowability of the sealer is low. In this case, the effect of filling gaps is low, and the sealing ability may deteriorate.

In the heat shrinkable coupling component, the lower limit of the shear viscosity of the sealer at 215°C and a shear rate of 0.01/s is preferably 7000 Pa·s, more preferably 10000 Pa·s, and still more preferably 13000 Pa·s. If the shear viscosity of the sealer at 215°C and a shear rate of 0.01/s is lower than 7000 Pa·s, the sealer tends to flow when the heat shrinkable coupling component is stored at high temperature for a long time, and it may be difficult to maintain the sealing ability. The upper limit of the shear viscosity of the sealer at 215°C and a shear rate of 0.01/s is preferably 70000 Pa·s, more preferably 60000 Pa·s, and still more preferably 50000 Pa·s. If the shear viscosity of the sealer at 215°C and a shear rate of 0.01/s is higher than 70000 Pa·s, the flowability of the sealer is excessively low. In this case, the effect of filling gaps is low, and the sealing ability may deteriorate.

In the heat shrinkable coupling component, the shear viscosity of the sealer at 215°C and a shear rate of 100/s is preferably 1500 Pa·s to 2500 Pa·s. If the shear viscosity of the sealer at 215°C and a shear rate of 100/s is lower than 1500 Pa·s, the sealer is softened and easily deformed during shrinkage of the heat shrinkable tube. In this case, a gap tends to be formed, and the sealing ability may deteriorate. If the shear viscosity of the sealer at 215°C and a shear rate of 100/s is higher than 2500 Pa·s, the flowability of the sealer during shrinkage of the heat shrinkable tube is low. In this case, gaps cannot be filled sufficiently with the sealer, and the sealing ability may deteriorate.

In the heat shrinkable coupling component 50, the melting point of the solder material forming the solder portion 2 is preferably 210°C to 240°C and more preferably 220°C to 230°C. The softening point of the sealer forming the sealing portions 3 is preferably 80°C to 170°C, more preferably 100°C to 150°C, and still more preferably 110°C to 140°C. When the melting point of the solder material is 210°C to 240°C and the softening point of the sealer is 80°C to 170°C, the combination of the heat shrinkable tube 1, the solder material, and the sealer can improve the heat resistance and sealing ability of the heat shrinkable coupling component 50 and the connectivity of the insulated wires.

In the heat shrinkable coupling component 50, the melting point of the sealer is preferably 110°C to 170°C and more preferably 120°C to 160°C. When the melting point of the sealer is 110°C to 170°C, the sealer has better flowability, and its effect of filling gaps is further improved, so that the sealing ability can be further improved. If the melting point is lower than 110°C, the sealer is softened and easily deformed during shrinkage of the tube. In this case, a gap tends to be formed, and the sealing ability may deteriorate. If the melting point is higher than 170°C, the flowability during shrinkage is low. In this case, the effect of filling gaps is low, and the sealing ability may deteriorate.

The sealer used may be, for example, a polyolefin, a fluorocarbon resin, or a fluorocarbon rubber. The sealer used may be one or a mixture of two or more of high-density polyethylenes (HDPEs), low-density polyethylenes (LDPEs), linear low-density polyethylenes (LLDPEs), ethylene-vinyl acetate (EVA) copolymers, ethylene-ethyl acrylate (EEA) copolymers, ethylene-methyl methacrylate (EMMA) copolymers, polyvinylidene fluoride (PVDF), tetrafluoroethylene-hexafluoropropylene (FEP) copolymers, tetrafluoroethylene-hexafluoropropylene-vinylidene fluoride (THV) copolymers, vinylidene fluoride-based rubber (FKM), fluorinated ethylene propylene-based rubber (FEPM), and tetrafluoroethylene-perfluorovinylether-based rubber (FFKM). The sealer may contain a coloring agent, an antioxidant, an infrared absorber, or a lubricant.

The sealer may be crosslinked in order to adjust the shear viscosity. Electron beam irradiation using an electron beam, gamma rays, etc. may be used for crosslinking, and chemical crosslinking may also be used.

The sealer may contain an inorganic filler in order to adjust the shear viscosity. The inorganic filler used may be, for example, silica, hydrotalcite, clay, or a combination thereof.

The content of the inorganic filler in the sealer is preferably more than 0.2 parts by mass, more preferably 1.0 part by mass or more, and still more preferably 1.5 parts by mass or more based on 100 parts by mass of the resin in the sealer. If the content of the inorganic filler is 0.2 parts by mass or less, the effect of improving the shear viscosity may be insufficient. The content of the inorganic filler in the sealer is preferably less than 5.0 parts by mass, preferably 4.0 parts by mass or less, and still more preferably 3.5 parts by mass or less. If the content of the inorganic filler exceeds 5.0 parts by mass, the shear viscosity is excessively high, and this may cause a reduction in the sealing ability.

The solder material used may be a metal-based material. The solder material used may be, for example, Sn, Sb, Pb, Bi, Ag, Cu, Ni, In, Ge, P, Zn, or a combination thereof. Preferably, the solder material is a material containing Sn-Ag, Sn-Cu, Sn-Sb, Sn-Pb, or Pb-In because the melting point of the solder material can be controlled within a preferred range. The solder material may contain a flux.

In the heat shrinkable coupling component 50, the transmittance of infrared light having a wavelength of 1 $\mu$m through the sealer is preferably 1.0% to 30.0%, more preferably 3% to 22%, and still more preferably 5% to 16%. If the transmittance of infrared light through the sealer exceeds the above upper limit, the sealing portions 3 are slowly heated during infrared heating, and the sealing portions 3 do not easily soften, so that the sealing ability of the heat shrinkable coupling component may deteriorate. If the transmittance of infrared light through the sealer is less than the above lower limit, the sealing portions 3 are preferentially softened, and the sealing ability of the solder material may deteriorate. When the transmittance of infrared light having a wavelength of 1 $\mu$m through the sealer is within the above range, the infrared absorption of the heat shrinkable coupling component 50 during infrared heating can be improved, and the sealing ability of the heat shrinkable coupling component can also be improved.

Since the heat shrinkable coupling component includes the heat shrinkable tube, the heat shrinkable coupling component has good shrinkage performance, good sealing ability, and high heat resistance.

<Method of manufacturing heat shrinkable tube>

A method of manufacturing the heat shrinkable tube is according to claim 12.

(Extrusion molding step)

First, the ethylene-tetrafluoroethylene copolymer serving as a resin component of the heat shrinkable tube and optional additional additives are mixed using, for example, a melt mixer to prepare the resin composition for forming the heat shrinkable tube. In the resin composition, a coloring agent and a crosslinking aid are optionally added to the raw materials of the ethylene-tetrafluoroethylene copolymer. The melting point and the storage elastic modulus can be controlled by changing the selection of the raw materials of the ethylene-tetrafluoroethylene copolymer and controlling the crosslinking. No particular limitation is imposed on the melt mixer, and the melt mixer used may be, for example, an open roll mill, a Banbury mixer, a pressure kneader, a single-screw mixer, or a multi-screw mixer.

Next, in this step, the resin composition containing the ethylene-tetrafluoroethylene copolymer as the main component is subjected to extrusion molding into a tube. The extrusion molding of the resin composition is performed using a melt extruder. Specifically, the resin composition is heated to a temperature equal to or higher than its melting point to melt the composition, and the molten resin composition is extruded from an extrusion die having a cylindrical cavity, cooled to a temperature equal to or lower than the melting point using cooling water to solidify the resin composition, and the resin composition is thereby extruded into a tube. The dimensions of the extrusion-molded product can be designed according to its application etc. The dimensions of the extrusion-molded product can be adjusted by changing the dimensions of the extrusion die and the drawdown ratio. The "drawdown ratio" is the ratio of the cross-sectional area of the extrusion die to the cross-sectional area of the tube after extrusion molding. To reduce roughening of the surface during extrusion, the drawdown ratio is preferably 6 or more and more preferably 10 or more.

(Crosslinking step)

In the crosslinking step, the tube formed in the extrusion molding step is crosslinked by irradiation. In this step, the ethylene-tetrafluoroethylene copolymer, which is the base resin of the extrusion molded product, is crosslinked to impart shrinkability (shape memory effect) when the tube is heated and shrunk at high temperature after the expansion step and the shape retention ability at high temperature after shrinkage. A preferred method of crosslinking the ethylene-tetrafluoroethylene copolymer is to irradiate the ethylene-tetrafluoroethylene copolymer with radioactive rays. Since the ethylene-tetrafluoroethylene copolymer crosslinked by the irradiation with radioactive rays is not easily shaped, the irradiation with radioactive rays (crosslinking) is performed after the extrusion molding step. By performing the irradiation with radioactive rays after extrusion molding, the tube can be reliably molded, and the effect of the irradiation with radioactive rays can be obtained sufficiently.

Examples of the radioactive rays used for irradiation crosslinking of the ethylene-tetrafluoroethylene copolymer include electron beams ($\beta$ rays) and $\gamma$ rays. The radioactive rays are preferably electron beams because the running cost of the electron accelerator for the electron beams is low. Moreover, high-power electron beams can be obtained using the electron accelerator, and it can be easily controlled.

The dose of the radioactive rays is preferably in the range of 30 kGy to 300 kGy. If the dose of the radioactive rays is less than 30 kGy, the degree of crosslinking is small. In this case, the strength of the heat shrinkable coupling component is insufficient, and the heat shrinkable coupling component is easily broken. Moreover, the shrinkage performance (shape memory effect) deteriorates, and the shape retention ability at high temperature after shrinkage may deteriorate. If the dose of the radioactive rays exceeds 300 kGy, the degree of crosslinking is high. In this case, the flexibility of the shrunk heat shrinkable coupling component deteriorates, and the heat shrinkable coupling component may be easily broken during assembly. Moreover, the tube is not easily expanded, and variations in quality tend to occur. Therefore, the concentricity may decrease, and variations in the Longitudinal change may occur.

(Heating step)

In the heating step, the tube subjected to the crosslinking step is heated such that the temperature of the tube is 250°C to 280°C. In this manner, the concentricity of the expanded tube can be reduced, and the expansion speed can be increased. Therefore, the manufacturing cost of the heat shrinkable tube and the variations in the quality can be reliably reduced. If the heating temperature of the tube is less than the above lower limit, the expansion may be insufficient, and the linear velocity of expansion may decrease. If the heating temperature of the tube exceeds the above upper limit, the tube may be thermally damaged. It is only necessary that the tube be heated to a temperature of 250°C to 280°C immediately before expansion. To improve the efficiency of heating and reduce damage by overheating, multistage heating including two or more heating stages may be used.

(Expansion step)

In the expansion step, the tube subjected to heating is expanded. The tube may be expanded while heated. To expand the tube, a well-known expansion method generally used to produce a conventional heat shrinkable tube may be used. Examples of the method that can be used include: a method in which, after the extrusion-molded product is heated to a temperature equal to or higher than the melting point, compressed air is introduced into the tube; and a method in which the tube is expanded by, for example, reducing pressure from the outside such that a prescribed inner diameter is obtained and then the expanded tube is cooled to fix its shape. By fixing the shape of the expanded extrusion-molded product, the heat shrinkable tube is obtained. Examples of the fixing method include a method in which the tube is cooled to a temperature equal to or lower than the melting point of the base resin component. The product formed by expanding the extrusion molded product and then fixing its shape is used as the heat shrinkable tube. The tube is expanded (increased in diameter) such that, for example, the average inner diameter of the tube is increased by a factor of 1.4 to 4.

In the expansion step, the pressure inside the tube is increased so as to be higher by at least 50 kPa than the outside pressure to expand the tube. If the pressure inside the tube is higher by less than 50 kPa than the outside pressure, the expansion may be insufficient, and the linear velocity of the expansion may be low. The expansion factor when the tube is used as a heat shrinkable coupling component is preferably 2.5 or more and more preferably 3 or more. The dimeter increased by the expansion can be controlled by changing the size of the expansion die. By reducing the frictional resistance between the expansion die and the tube when the tube is increased in diameter, the expansion of the tube is stabilized. In this case, the concentricity can be improved, and the variations in the Longitudinal change can be reduced. To reduce the frictional resistance, the expansion die may be subjected to surface treatment. In the surface treatment, the expansion die may be coated with a fluorocarbon resin such as PTFE or PFA having a small coefficient of friction, or the surface shape may be changed by sand blasting, machining, or electric discharge machining. By increasing the surface roughness or reducing the area of contact by forming grooves, the frictional resistance can be reduced.

In the heat shrinkable tube manufactured by the above-described heat shrinkable tube manufacturing method, the lower limit of the storage elastic modulus at 250°C to 280°C is 0.8 MPa, preferably 1.0 MPa, and more preferably 1.2 MPa. The upper limit of the storage elastic modulus is 2.8 MPa, preferably 2.0 MPa, and more preferably 1.6 MPa.

The lower limit of the melting point of the heat shrinkable tube is 210°C and more preferably 215°C. The upper limit of the melting point of the heat shrinkable tube is 250°C and more preferably 240°C. When the storage elastic modulus and the melting point are within the above ranges, the expansion can be stabilized. Moreover, the deformability of the heat shrinkable tube when it is heated to its melting point or higher is good, and the heat shrinkable tube can be easily and reliably increased in diameter.

The concentricity of the heat shrinkable tube is preferably 60% or more, more preferably 70% or more, and still more preferably 80% or more. The lower limit of the Longitudinal change of the heat shrinkable tube is preferably -15% or more, more preferably -10% or more, and still more preferably -5% or more. The concentricity is defined by the following formula.

Concentricity (%) = minimum wall thickness in cross section of tube / maximum wall thickness $\times$ 100

The upper limit of the Longitudinal change of the heat shrinkable tube is preferably +15% or less, more preferably +10% or less, and still more preferably +5% or less. The Longitudinal change is defined by the following formula.

Longitudinal change (%) = (length of tube after shrinkage - length of tube before shrinkage) / length of tube before shrinkage $\times$ 100

The end surface inclination angle of the heat shrinkable tube after shrinkage is preferably 10° or less, more preferably 8° or less, and still more preferably 5° or less. The end surface inclination angle is a measure of the degree of deformation of longitudinal end surfaces of the heat shrinkable tube that is caused by heat shrinkage. The end surface inclination angle is measured by the following procedure. The heat shrinkable tube after heat shrinkage is cut from its end portion in the longitudinal direction. In the vertical cross section obtained, the distance between a straight line parallel to the outer diameter and passing through the uppermost point most protruding from the end portion in the longitudinal direction and a straight line parallel to the outer diameter and passing through the lowermost point most recessed from the end portion in the longitudinal direction is defined as X mm. The outer diameter of the heat shrinkable tube is denoted as D mm. Then the end surface inclination angle is the angle θ that satisfies the following formula.

$$\tan \theta = X/D$$

The inner diameter of the heat shrinkable tube, the concentricity, the Longitudinal change, and the end surface inclination angle after shrinkage can be changed by controlling the storage elastic modulus of the heat shrinkable tube, the heating temperature, the heating method, the expansion conditions such as the difference in pressure between the inner side of the tube and the outside, and the surface treatment on the expansion die.

With the heat shrinkable tube manufacturing method, a heat shrinkable tube having good heat resistance and good heat shrinkage performance and usable for a heat shrinkable coupling component for high heat resistant insulated wires can be manufactured. With the heat shrinkable tube manufacturing method, variations in quality can be reduced.

[Heat shrinkable coupling component manufacturing method]

A heat shrinkable coupling component manufacturing method is a method of manufacturing a heat shrinkable coupling component and includes the steps of: producing sealing portions; and fixing a pair of the sealing portions on the inner circumferential surface of the heat shrinkable tube at respective positions on opposite end sides. Preferably, the heat shrinkable coupling component manufacturing method further includes the step of fixing a solder portion on the inner circumferential surface of the heat shrinkable tube at a position between the pair of sealing portions. Since the heat shrinkable coupling component manufacturing method includes the step of producing the sealing portions using a sealer and the step of fixing the pair of sealing portions on the inner circumferential surface of the heat shrinkable tube at the respective positions on opposite end sides, a heat shrinkable coupling component having good shrinkage performance, good sealing ability, and high heat resistance can be manufactured.

(Sealing portion producing step)

In this step, the sealer is used to produce the sealing portions. In the sealing portion producing step, the sealer is used to produce the sealing portions. First, the sealer used to form the sealing portions is prepared using, for example, a melt mixer. No particular limitation is imposed on the melt mixer, and the melt mixer used is, for example, an open roll mill, a Banbury mixer, a pressure kneader, a single-screw mixer, or a multi-screw mixer.

Next, the sealer is subjected to extrusion molding using a melt extruder. Specifically, the sealer is melted by heating it to a temperature equal to or higher than the melting point of a main component resin, and the molten sealer is extruded from an extruding die having a cylindrical cavity. Then the extruded sealer is cooled to a temperature equal to or lower than the melting point of the main component resin using, for example, cooling water to solidify the sealer. The sealer is thereby extrusion molded into a tube. The tube is cut to a prescribed length to produce ring-shaped sealing portions.

(Sealing portion fixing step)

In this step, a pair of the sealing portions are fixed to the inner circumferential surface of the heat shrinkable tube at respective positions on opposite end sides. First, the heat shrinkable tube and the pair of sealing portions formed of the sealer are disposed on a metal rod. In this step, a solder portion formed of a solder material may also be disposed between the pair of sealing portions. In this step, the entire heat shrinkable tube disposed on the metal rod is heated and shrunk, and the pair of sealing portions are thereby fixed to the inner circumferential surface of the heat shrinkable tube at the respective positions on the opposite end sides. When the solder portion is also disposed on the metal rod at the position between the pair of sealing portions, the solder portion is also fixed to the inner circumferential surface of the heat shrinkable tube at the position between the pair of sealing portions by shrinking the heat shrinkable tube. Examples of the heating method include a method in which the heat shrinkable tube is heated using a heat gun and a method in which the heat shrinkable tube is heated using an infrared heating apparatus. Then the heat shrinkable tube with the sealing portions, the solder portion, etc. fixed thereto is removed from the metal rod, and the heat shrinkable coupling component is thereby formed.

The softening point of the sealer is preferably 80°C to 170°C. When the softening point of the sealer is 80°C to 170°C, the sealer has appropriate flowability, and its effect of filling gaps is high, so that the sealing ability can be improved.

The rest of the features of the heat shrinkable coupling component manufacturing method are as described above.

[Modes of use of heat shrinkable coupling component]

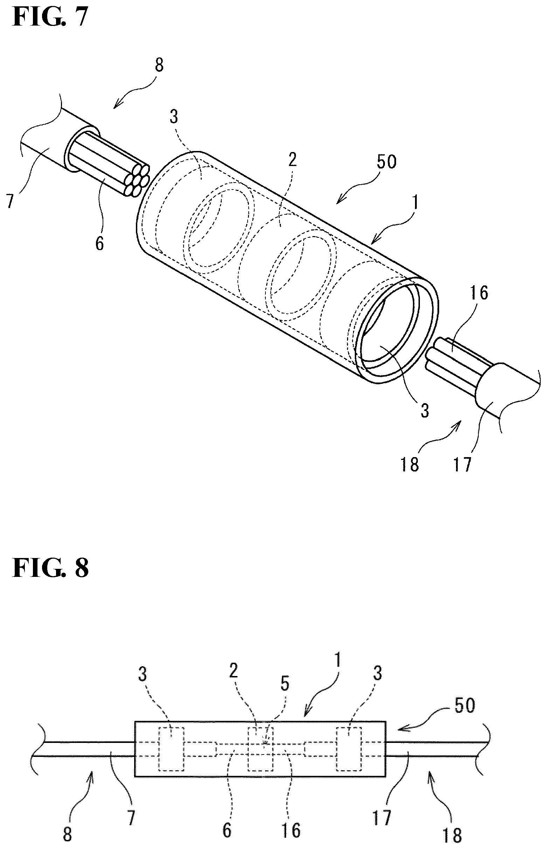

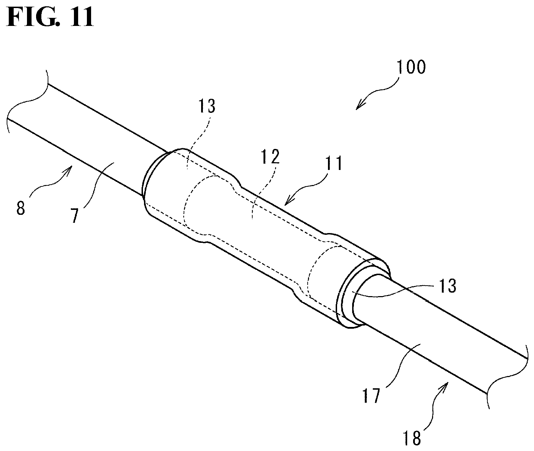

Examples of the mode of use of the heat shrinkable coupling component 50 include: a component for coupling a plurality of insulated wires; and a component for attaching a ground wire for an insulated wire. In one exemplary mode, the heat shrinkable coupling component 50 is used to couple a plurality of insulated wires, and a method of coupling connection portions of exposed conductors of two insulated wires will be described with reference to Figs. 7 to 11. However, the number of insulated wires and their structure are not limited to those in Figs. 7 to 11. A process for coupling the plurality of insulated wires using the heat shrinkable coupling component 50 mainly includes a heat shrinkable coupling component covering step, a heat shrinkable coupling component heating step, and a heat shrinkable coupling component cooling step. In the following description of the mode of use, the heat shrinkable coupling component 50 is used to couple two insulated wires 8 and 18 to obtain an electric wire bundle 100 shown in Fig. 11.

(Heat shrinkable coupling component covering step)

When the heat shrinkable coupling component 50 is used to couple the two insulated wires 8 and 18, first, a conductor 6 exposed from an insulating layer 7 of the insulated wire 8 and a conductor 16 exposed from an insulating layer 17 of the insulated wire 18 are inserted into the heat shrinkable coupling component 50 from respective openings at opposite ends, as shown in Fig. 7. Then, as shown in Fig. 8, the heat shrinkable coupling component 50 is placed such that the boundary between the exposed portion of the conductor 6 and the insulating layer 7 and the boundary between the exposed portion of the conductor 16 and the insulating layer 17 are covered with the heat shrinkable coupling component 50. When the two insulated wires 8 and 18 are covered with the heat shrinkable coupling component 50, it is preferable that the two insulated wires 8 and 18 are disposed such that a conductor coupling portion 5 around the boundary between the exposed conductor 6 of the insulated wire 8 and the exposed conductor 16 of the insulated wire 18 is covered with the solder portion 2.

(Heat shrinkable coupling component heating step)

In the heat shrinkable coupling component heating step, the heat shrinkable coupling component 50 is heated and thermally shrunk. Examples of the heating method include a method in which the heat shrinkable coupling component 50 is heated using a heat gun, an infrared heating apparatus, etc. The heating temperature is determined according to the heat shrinking temperature of the heat shrinkable coupling component 50 and is, for example, 200°C to 600°C. The heating time is set such that the heat shrinkable coupling component 50 shrinks sufficiently and is, for example, 1 second to 30 seconds.

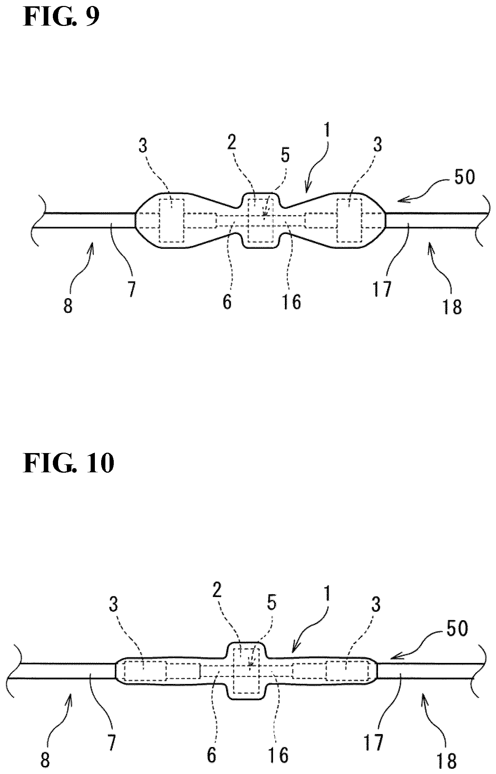

The shrinkage behavior of the heat shrinkable coupling component 50 is shown in Figs. 9 to 11. Preferably, the heat shrinkable tube 1 is shrunk first, and then the sealing portions 3 are deformed. Finally, the solder portion 2 is melted. When the heat shrinkable coupling component 50 is heated, the solder material in the solder portion 2 flows and spreads. Figure 11 shows a shrunk heat shrinkable tube 11 in the electric wire bundle 100 after coupling, a solder portion 12 after melting, and sealing portions 13 after melting. Since the viscosity of the sealer in the sealing portions 3 is high, the degree of spread of the sealer is smaller than that of the solder portion 2, and the openings of the heat shrinkable tube 1 are thereby sealed. Therefore, the solder material in the solder portion 2 is prevented from flowing out through the openings of the heat shrinkable tube 1. The solder material in the solder portion 2 covers the exposed portion of the conductor 6 of the insulated wire 8 and the exposed portion of the conductor 16 of the insulated wire 18, enters the inner side of the insulating layer 7 from the boundary between the exposed portion of the conductor 6 and the insulating layer 7, and also enters the inner side of the insulating layer 17 from the boundary between the exposed portion of the conductor 16 and the insulating layer 17.

In atmospheric heating, heat is transferred from the outside. Therefore, by setting the melting point of the solder material in the solder portion 2 to 210°C to 240°C and the softening point of the sealer in the sealing portions 3 to 80°C to 170°C, good assembly can be achieved. If the melting point of the sealing portions 3 is high and the sealing portions 3 are softened slowly, the end portions of the heat shrinkable tube 1 cannot be sealed, and the molten solder material flows out. If the melting point of the sealing portions 3 is low and the sealing portions 3 are rapidly softened, the molten sealer flows out. If the melting point of the solder material is high, the coupling of the insulated wires by the heat shrinkable coupling component 50 may be insufficient. If the melting point of the solder material is low, the molten solder material may not be held by the sealing portions 3 and may flow out. If the shrinkage of the tube is slow, the sealing portions 3 and the solder portion 2 are melted while many gaps are still present, so that the molten materials cannot be held. When the melting point of the solder material and the softening point of the sealer are within the above ranges, the combination of the heat shrinkable tube 1, the solder material, and the sealer allows the heat shrinkable coupling component 50 to have high heat resistance and good sealing ability and to couple the insulated wires preferably.

When an infrared heating apparatus is used to shrink the heat shrinkable coupling component 50, the sealing portions 3 absorb the infrared light and are thereby heated. As described above, the transmittance of infrared light having a wavelength of 1 $\mu$m through the sealer is preferably 1.0% to 30.0%, more preferably 3% to 22%, and still more preferably 5% to 16%. If the transmittance of the infrared light through the sealer exceeds the above upper limit, the sealing portions 3 are not easily heated and may be softened slowly. If the transmittance of the infrared light through the sealer is less than the above lower limit, the sealing portions 3 are preferentially softened and may flow out from the heat shrinkable coupling component 50. When the transmittance of the infrared light having a wavelength of 1 $\mu$m through the sealer is within the above range, the infrared absorbability of the heat shrinkable coupling component 50 during infrared heating can be improved, and the heat shrinkage behavior can be easily controlled.

To visually check whether the solder material has been heated and melted sufficiently, a thermosensitive paint whose color disappears at a designated temperature or higher may be applied to the solder material. A bi-alloy type solder ring having a high-melting point portion in its central portion may be used. With this solder ring, melting of the high-melting point portion can be utilized to check the temperature. The high-melting point portion is used for visual inspection, and it is not always necessary for the high-melting point portion to melt completely.

(Heat shrinkable coupling component cooling step)

In the heat shrinkable coupling component cooling step, the heat shrinkable coupling component 50 after heat shrinkage is cooled. No particular limitation is imposed on the cooling method. For example, the heat shrinkable coupling component 50 may be left to stand for natural cooling or may be forcibly cooled using cold air etc. As a result of the cooing, the solder material and the sealer are solidified, and the insulated wires are thereby coupled together and waterproofed.

[Other embodiments]

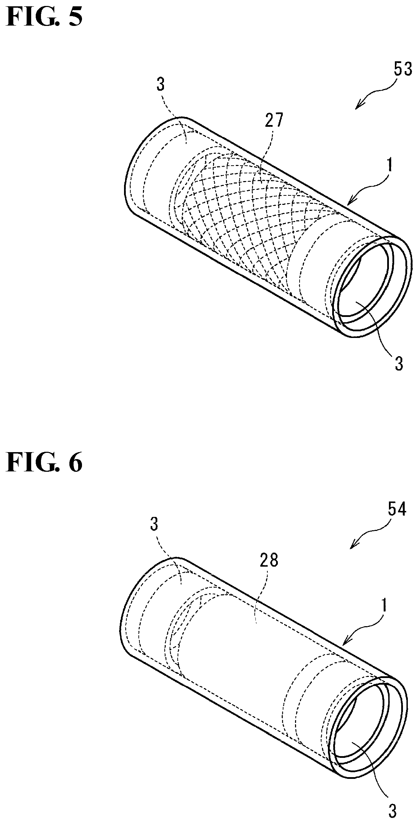

It should be noted that the embodiments described above are illustrative and non-restrictive in every respect. The scope of the present invention is not limited to the structures of the embodiments but is defined by the scope of the claims.
In another embodiment of the heat shrinkable coupling component, the heat shrinkable coupling component may include the heat shrinkable tube, the pair of sealing portions disposed on the inner circumferential surface of the heat shrinkable tube at respective positions on opposite end sides, and a solder braid instead of the solder portion. A heat shrinkable coupling component 53 according to another embodiment shown in Fig. 5 includes the heat shrinkable tube 1, the pair of sealing portions 3 disposed on the inner circumferential surface of the heat shrinkable tube 1 at respective positions on opposite end sides, and a solder braid 27. When the solder portion 2 is the solder braid prepared by impregnating a braided wire with solder, the metal material forming the braided wire may be, for example, Cu, Fe, Sn, Sb, Ag, Ni, Al, Zn or a combination thereof. The metal material forming the solder material in the solder braid may be the same as the solder material described above. The solder braid 27 may be used in combination of the solder portion described above.
In another embodiment of the heat shrinkable coupling component, a crimp sleeve may be used instead of the solder portion in the heat shrinkable coupling component. A heat shrinkable coupling component 54 in the other embodiment shown in Fig. 6 includes the heat shrinkable tube 1, the pair of sealing portions 3 disposed on the inner circumferential surface of the heat shrinkable tube at respective positions on opposite end sides, and a crimp sleeve 28. One of Cu, Fe, Sn, Sb, Ag, Ni, Al, and Zn or a combination of two or more of them may be used as the material of the crimp sleeve. To prevent wear and scratches and to improve chemical durability, a coating layer may be formed on the surface. One of Cu, Fe, Sn, Sb, Ag, Ni, Al, and Zn or a combination of two or more of them may be used for the coating layer.

EXAMPLES

The present invention will be described more specifically by way of Examples, but the invention is not limited to the following Examples.

<Test Example 1>

Heat shrinkable tubes Nos. 1 to 10 shown in Table 1 were produced through a material selection step, a resin mixing step, an extrusion step, an irradiation step, and an expansion step. First, triallyl isocyanurate used as a crosslinking aid was mixed with an ethylene-tetrafluoroethylene copolymer resin containing fluorine in an amount shown in Table 1 to thereby prepare a resin composition, and the resin composition was subjected to melt extrusion molding to form a tube. The extrusion molding was performed at a die temperature of 280°C, a drawdown ratio of 10, and a linear velocity of 20 m/min. Then the extruded resin composition was subjected to crosslinking by electron beam irradiation under the condition of an irradiation dose of 25 kGy to 400 kGy. The tube after the irradiation was heated to 250°C to 280°C, and an expansion die was used to increase the pressure inside the tube to a level higher than the pressure outside the tube to thereby expand the tube. The expansion die used had been coated with a fluorocarbon resin. By changing the selection of the raw materials and adjusting the degree of crosslinking, the melting point and the storage elastic modulus at high temperature were controlled. The tube was shrunk by heating the tube at 270°C for 10 minutes.
For each of the heat shrinkable tubes Nos. 1 to 10, the melting point of the tube, the storage elastic modulus at 250°C to 280°C [MPa], the concentricity [%], and the Longitudinal change [%] are shown. The expansion performance and shrinkage performance of the tube were rated on a four-level scale of A to D. The results are shown in Table 1. "-" in the following tables indicates that the corresponding evaluation was not performed.
Evaluation criteria for the expansion performance and shrinkage performance of the tubes are shown below. A to C are practically acceptable levels.

(1) Expansion performance

A: Variations in dimensions after continuous expansion are particularly small, and the expansion performance is particularly high.

B: Variations in dimensions after continuous expansion are small, and the expansion performance is high.
C: Stable expansion can be performed.
D: Stable expansion cannot be performed.

(2) Shrinkage performance

A: The shrinkage time is particularly short, and the shrinkage performance is particularly high.
B: The shrinkage time is short, and the shrinkage performance is high.
C: The shrinkage time is slightly long.
D: The tube does not shrink to the desired size.

[Table 1]

| Test No. | | 1 | 2 | 3 | 4 | 5 | 6 | 7 | 8 | 9 | 10 |
|---|---|---|---|---|---|---|---|---|---|---|---|
| Base resin | Composition | ETFE | ETFE | ETFE | ETFE | ETFE | ETFE | ETFE | ETFE | ETFE | ETFE |
| | Fluorine content [% by mass] | 60 | 60 | 60 | 60 | 60 | 60 | 60 | 60 | 64 | 56 |
| Physical properties of tube | Melting point of tube [°C] | 225 | 225 | 225 | 225 | 225 | 225 | 225 | 225 | 205 | 265 |
| | Storage elastic modulus at 250°C to 280°C [MPa] | 0.6 | 0.8 | 1.0 | 1.2 | 1.6 | 2.0 | 2.8 | 3.0 | 0.6 | 3.1 |
| Evaluation of tube | Expansion performance of tube | C | C | B | A | A | B | C | D | C | D |
| | Thickness difference ratio of tube [%] | 55 | 65 | 70 | 85 | 80 | 70 | 60 | 50 | 55 | 40 |
| | Length change ratio [%] | -12 to 1 | -11 to -1 | -7 to 1 | -3 to 3 | -5 to 2 | -8 to -3 | -14 to -4 | -16 to 2 | -14 to -1 | -20 to 10 |
| | Shrinkage performance of tube | D | C | B | A | A | A | A | B | D | C |

As shown in Table 1, when the storage elastic modulus at 250°C to 280°C was 0.8 MPa to 2.8 MPa, the expansion performance, the shrinkage performance, and the wall thickness difference ratio were good. However, in Nos. 1 and 9 in which the storage elastic modulus was less than 0.8 MPa, the tube did not shrink to the desired size, and the shape memory effect obtained was not sufficient. In Nos. 8 and 10 in which the storage elastic modulus was more than 2.8 MPa, it was difficult to expand the tube continuously and stably.

<Test Example 2>

Heat shrinkable tubes Nos. 11 to 17 were produced in the same manner as that for No. 2 in Test Example 1 except that the raw materials of the ethylene-tetrafluoroethylene copolymer resin were selected such that the content of fluorine in the ethylene-tetrafluoroethylene copolymer was a value shown in Table 2. In No. 18, a PTFE raw material was used. In the PTFE, a petroleum-based solvent was added to the raw material, and these materials were mixed to produce a preform ingot. The preform ingot was subjected to extrusion molding, dried, and fired to produce an extruded tube. The extruded tube was expanded in the same manner as that for the ETFE. In No. 19, a PVDF raw material was used to produce a heat shrinkable tube. The PVDF was subjected to melt molding in the same manner as that for the ETFE to produce an extruded tube. The extruded tube was subjected to irradiation and then expanded. Next, one of the heat shrinkable tubes, a solder material (Sn: 96.0% by mass, Ag: 3.0% by mass, and Cu: 1.0% by mass) having a melting point of 223°C, and a sealer (THV) having a softening point of 110°C were used to dispose a ring-shaped solder portion at a longitudinal central portion of a metal rod and ring-shaped sealing portions at opposite end portions. Next, a lead wire was disposed such that its end portion was positioned in the region of the solder portion, and the heat shrinkable tube was disposed on the outer circumferential surface of the resulting metal rod. Then a heat gun was used to apply hot air at 500°C to shrink the tube, and the solder portion and the sealing portions were thereby fixed. After cooling, the tube was removed from the metal rod, and a heat shrinkable coupling component was thereby produced. The length of the tube was 20 mm. The width of the sealer was 2 mm, and its thickness was 0.4 mm. The width of the solder material was 2.5 mm, and its thickness was 0.4 mm. To measure the softening point, a thermo-mechanical analysis apparatus TMA-50 (manufactured by Shimadzu Corporation) was used, and the temperature at which the thickness of the 0.4 mm sheet was reduced to 50% under the conditions of a heating rate of 10°C/min, a pressing rod diameter of 0.5 mm$\phi$, and a pressure of 5 kPa was used as the softening point. Table 2 shows the content of fluorine in each of the heat shrinkable tubes Nos. 11 to 19, the physical properties of the tubes, the results of evaluation of the expansion performance, the concentricity, and the shrinkage performance performed in the same manner as in Test Example **1,** and the results of evaluation of the performance of each of the heat shrinkable coupling components.

The performance of each heat shrinkable coupling component was evaluated by placing the heat shrinkable coupling component on exposed portions of ETFE electric wires from which their coating had been removed, shrinking the heat shrinkable coupling component, and applying a voltage in a solution to check whether a leakage current was equal to or smaller than a threshold value. To evaluate the heat resistance, the electric wires after the shrinkage were heated at 200°C for 500 hours, and then the leakage current was evaluated. The solution used for immersion was a solution containing 5% of NaCl and 0.5% of a surfactant, and a voltage of 1 kV was applied for 60 seconds to evaluate the leakage current.

The criteria for the evaluation of the heat shrinkable coupling component are shown below.

A: The pass rate of the leakage current test is 90% or more.
B: The pass rate of the leakage current test is 80% or more.
C: The pass rate of the leakage current test is 75% or more.
D: The pass rate of the leakage current test is less than 75%.

[Table 2]

| Test No. | | 11 | 12 | 13 | 14 | 15 | 16 | 17 | 18 | 19 |
|---|---|---|---|---|---|---|---|---|---|---|
| Base resin | Composition | ETFE | ETFE | ETFE | ETFE | ETFE | ETFE | ETFE | PTFE | PVDF |
| | Fluorine content [% by mass] | 56 | 58 | 59 | 60 | 61 | 62 | 64 | 76 | 58 |
| Physical properties of tube | Melting point of tube [°C] | 265 | 250 | 240 | 230 | 220 | 210 | 205 | 327 | 160 |
| | Storage elastic modulus at 250°C to 280°C [MPa] | 1.7 | 1.5 | 1.4 | 1.3 | 1.2 | 1.1 | 1.0 | 20.0 | 0.7 |
| Evaluation of tube | Expansion performance of tube | C | B | B | A | A | B | C | D | D |
| | Thickness difference ratio of tube [%] | 75 | 80 | 85 | 90 | 90 | 85 | 80 | - | - |
| | Shrinkage performance of tube | C | B | B | A | A | A | B | D | B |

(continued)

| Test No. | | 11 | 12 | 13 | 14 | 15 | 16 | 17 | 18 | 19 |
|---|---|---|---|---|---|---|---|---|---|---|
| Sealer | Composition of sealer | THV | THV | THV | THV | THV | THV | THV | THV | THV |
| | Softening point of sealer [°C] | 110 | 110 | 110 | 110 | 110 | 110 | 110 | 110 | 110 |
| Solder material | Composition of solder material | Sn Ag Cu | Sn Ag Cu | Sn Ag Cu | Sn Ag Cu | Sn Ag Cu | Sn Ag Cu | Sn Ag Cu | Sn Ag Cu | Sn Ag Cu |
| | Melting point of solder material [°C] | 223 | 223 | 223 | 223 | 223 | 223 | 223 | 223 | 223 |
| Evaluation of heat shrinkable coupling component | Leakage current test | D | C | B | A | A | B | D | D | D |

As shown in Table 2, when the content of fluorine in the ETFE was 58% by mass to 62% by mass, the results of the evaluation of the tubes and the results of the evaluation od the heat shrnkable coupling components were good. In No. 11 in which the content of fluorine was less than 58% by mass, since the melting point was high, the shrinking temperature was high. Therefore, wher the tube was used for the heat shrinkable coupling component, the ETFE insulated wires used as the objects to be covered were damaged by heat. In No. 17 in which the content of fluorine was more than 62% by mass, the melting point was low. Therefore, when the heat shrinkable coupling component was used at 200°C, variations in performance were found. In No. 18, since the melting point of the PTFE was as high as 327°C, the material was not softened, and the tube was not easily expanded. Moreover, since the melting point of the PTFE was high, the shrinkage temperature was high. In this case, it was necessary to heat the tube for a long time, and the insulated wires were damaged by heat. In No. 19, since the melting point of the PVDF was as low as 160°C, the material was softened at high temperature, and it was difficult to expand the tube stably. Since the melting point of the PVDF was low and the shrinkage temperature was low, the heating conditions allowing the heated solder to melt were severe for the PVDF. In this case, the tube was damaged, and the characteristics of the heat shrinkable coupling component were poor.

<Test Example 3>

Heat shrinkable tubes Nos. 20 to 27 were produced in the same manner as in Test Example 1 except that different raw materials were used to control the molecular structure of the ethylene-tetrafluoroethylene copolymer resin. Next, one of the heat shrinkable tubes shown in Table 3, a solder material (Sn: 96.5% by mass and Ag: 3.5% by mass) having a melting point of 223°C, and a sealer (THV: 60% by mass and FKM; 40% by mass) having a softening point of 140°C were used to dispose a ring-shaped solder portion at a longitudinal central portion of a metal rod and ring-shaped sealing portions at opposite end portions. Next, a lead wire was disposed such that its end portion was positioned in the region of the solder portion, and the heat shrinkable tube was disposed on the outer circumferential surface of the resulting metal rod. Then a heat gun was used to apply hot air at 500°C to shrink the tube, and the solder portion and the sealing portions were thereby fixed. After cooling, the tube was removed from the metal rod, and a heat shrinkable coupling component was thereby produced. The length of the tube was 20 mm. The tubes differ in the ratio n/m of the number n of tetrafluoroethylene units to the number m of ethylene units in the ethylene-tetrafluoroethylene copolymer, and the results of the evaluation of the physical properties of each tube performed in the same manner as in Test Example 1 and the results of the evaluation of each heat shrinkable coupling component performed in the same manner as in Test Example 2 are shown in Table 3.
[Table 3]

| Test No. | | 20 | 21 | 22 | 23 | 24 | 25 | 26 | 27 |
|---|---|---|---|---|---|---|---|---|---|
| Base resin | Composition | ETFE | ETFE | ETFE | ETFE | ETFE | ETFE | ETFE | ETFE |
| | Ratio n/m of number of tetrafluoroethylene units to number of ethylene units | 1.00 | 1.02 | 1.03 | 1.04 | 1.12 | 1.15 | 1.20 | 1.30 |
| Physical properties of tube | Melting point of tube [°C] | 270 | 250 | 245 | 240 | 220 | 215 | 210 | 205 |
| | Storage elastic modulus at 250°C to 280°C [MPa] | 1.8 | 1.6 | 1.4 | 1.3 | 1.2 | 1.1 | 1.1 | 1.0 |
| Evaluation of tube | Expansion performance of tube | C | C | B | A | A | B | C | C |
| | Thickness difference ratio of tube [%] | 75 | 75 | 80 | 85 | 90 | 85 | 80 | 75 |
| | Shrinkage performance of tube | C | B | B | A | A | A | B | C |
| Sealer | Composition of sealer | THV FKM | THV FKM | THV FKM | THV FKM | THV FKM | THV FKM | THV FKM | THV FKM |
| | Softening point of sealer [°C] | 140 | 140 | 140 | 140 | 140 | 140 | 140 | 140 |
| Solder material | Composition of solder material | Sn Ag | Sn Ag | Sn Ag | Sn Ag | Sn Ag | Sn Ag | Sn Ag | Sn Ag |
| | Melting point of solder material [°C] | 223 | 223 | 223 | 223 | 223 | 223 | 223 | 223 |
| Evaluation of heat shrinkable coupling component | Leakage current test | D | C | B | A | A | B | C | D |

As shown in Table 3, when the ratio n/m of the number n of tetrafluoroethylene units to the number m of ethylene units in the ETFE was 1.02 to 1.20, the results of the evaluation of the tubes and the results of the evaluation of the heat shrinkable coupling components were good. In No. 20 in which the ratio n/m was less than 1.02, the melting point was high, and the shrinkage temperature was high. Therefore, when tube was used for the heat shrinkable coupling component, the ETFE insulated wires used as the objects to be covered were damaged by heat. In No. 27 in which the ratio n/m was more than 1.20, the melting point was low. Therefore, when the heat shrinkable coupling component was used at high temperature, the performance achieved was not stable, and the 200°C heat resistance was not satisfied.

<Test Example 4>

Heat shrinkable tubes Nos. 28 to 35 were produced in the same manner as that for No. 2 in Test Example 1 except that the molecular structure of the ETFE and the irradiation dose were controlled such that the storage elastic modulus at 25°C of the heat shrinkable tube obtained was a value shown in Table 4. Next, one of the heat shrinkable tubes shown in Table 4, a solder material (Sn: 95.0% by mass and Sb: 5.0% by mass) having a melting point of 236°C, and a sealer (PVDF: 60% by mass and EVA: 40% by mass) having a softening point of 80°C were used to produce a heat shrinkable coupling component using the same process as in Test Example 2. The storage elastic modulus at 25°C, strength, and flexibility of each of the heat shrinkable tubes Nos. 28 to 35 were evaluated. The evaluation results are shown in Table 4.
The strength and flexibility of each of the heat shrinkable tubes Nos. 28 to 35 were evaluated according to the following criteria.

(1) Strength of heat shrinkable coupling component

    A: No breakage occurred during assembly work, shrinkage, and use.
    B: Breakage rarely occurred during use.
    C: Breakage occurred during use in some cases.
    D: The possibility of the occurrence of breakage during use was high.

(2) Flexibility of heat shrinkable coupling component

    A: No breakage occurred during assembly work.

    B: Breakage rarely occurred during assembly work.

    C: Breakage occurred during assembly work in some cases.

    D: The possibility of the occurrence of breakage during assembly work was high.

[Table 4]

| Test No. | | 28 | 29 | 30 | 31 | 32 | 33 | 34 | 35 |
|---|---|---|---|---|---|---|---|---|---|
| Base resin | Composition | ETFE | ETFE | ETFE | ETFE | ETFE | ETFE | ETFE | ETFE |
| | Fluorine content [% by mass] | 60 | 60 | 60 | 60 | 60 | 60 | 60 | 60 |
| Physical properties of tube | Melting point of tube [°C] | 230 | 230 | 230 | 230 | 230 | 230 | 230 | 230 |
| | Storage elastic modulus at 250°C to 280°C [MPa] | 1.2 | 1.2 | 1.2 | 1.2 | 1.2 | 1.2 | 1.2 | 1.2 |
| | Storage elastic modulus at 25°C [MPa] | 400 | 500 | 550 | 600 | 800 | 850 | 900 | 1000 |
| Sealer | Composition of sealer | PVDF EVA | PVDF EVA | PVDF EVA | PVDF EVA | PVDF EVA | PVDF EVA | PVDF EVA | PVDF EVA |
| | Softening point of sealer [°C] | 80 | 80 | 80 | 80 | 80 | 80 | 80 | 80 |
| Solder material | Composition of solder material | Sn Sb | Sn Sb | Sn Sb | Sn Sb | Sn Sb | Sn Sb | Sn Sb | Sn Sb |
| | Melting point of solder material [°C] | 236 | 236 | 236 | 236 | 236 | 236 | 236 | 236 |
| Evaluation of heat shrinkable coupling component | Strength of heat shrinkable coupling component | C | B | B | A | A | A | A | A |
| | Flexibility of heat shrinkable coupling component | A | A | A | A | A | B | B | C |

As shown in Table 4, when the storage elastic modulus at 25°C of the ETFE was 500 MPa to 900 MPa, the strength and flexibility of the heat shrinkable coupling components can be improved. In No. 28 in which the storage elastic modulus at 25°C was less than 500 MPa, the strength of the heat shrinkable coupling component was insufficient. In No. 35 in which the storage elastic modulus at 25°C was more than 900 MPa, the flexibility of the heat shrinkable coupling component was low, and the heat shrinkable coupling component was easy to break.

<Test Example 5>

Heat shrinkable tubes Nos. 36 to 43 were produced in the same manner as that for No. 15 in Test Example 2 except that the drawdown ratio during extrusion was controlled such that the arithmetic average roughness Ra of the surface of the heat shrinkable tube obtained was a value shown in Table 5. Moreover, heat shrinkable coupling components were produced using the same process as in Test Example 2. The solder material used and the sealer used were the same as those in Test Example 2. The arithmetic average roughness Ra of each of the heat shrinkable tubes Nos. 36 to 43 and the results of evaluation of the efficiency of infrared heating and the visibility through the heat shrinkable tube are shown in Table 5. The arithmetic average roughness Ra of the heat shrinkable tube was measured using a stylus-type roughness meter.

The efficiency of infrared heating of each heat shrinkable tube and the visibility through the heat shrinkable tube were evaluated according to the following criteria. The evaluation results are shown in Table 5.

(1) Efficiency of infrared heating of heat shrinkable tube

A: The shrinkage time of the heat shrinkable coupling component is 20 seconds or shorter, and the efficiency of infrared heating is particularly good.
B: The shrinkage time of the heat shrinkable coupling component is 25 seconds or shorter.
C: The shrinkage time of the heat shrinkable coupling component is 35 seconds or shorter.
D: The shrinkage time of the heat shrinkable coupling component is 35 seconds or longer.

(2) Visibility through heat shrinkable tube

A: The ease of checking the state of impregnation of the electric wires with the solder material, the melting state of the sealer, and the covered state of the electric wires is particularly good.
B: The state of impregnation of the electric wires with the solder material, the melting state of the sealer, and the covered state of the electric wires can be checked.
C: The state of impregnation of the electric wires with the solder material and the progress of melting of the sealer can be checked.
D: The state of impregnation of the electric wires with the solder material and the progress of melting of the sealer cannot be checked.

[Table 5]

| Test No. | | 36 | 37 | 38 | 39 | 40 | 41 | 42 | 43 |
|---|---|---|---|---|---|---|---|---|---|
| Base resin | Composition | ETFE | ETFE | ETFE | ETFE | ETFE | ETFE | ETFE | ETFE |
| | Fluorine content [% by mass] | 61 | 61 | 61 | 61 | 61 | 61 | 61 | 61 |
| Physical properties of tube | Melting point of tube [°C] | 220 | 220 | 220 | 220 | 220 | 220 | 220 | 220 |
| | Storage elastic modulus at 250°C to 280°C [MPa] | 1.2 | 1.2 | 1.2 | 1.2 | 1.2 | 1.2 | 1.2 | 1.2 |
| | Arithmetic average surface roughness Ra [$\mu$m] | 0.05 | 0.10 | 0.30 | 0.50 | 1.00 | 1.50 | 2.00 | 3.00 |
| Sealer | Composition of sealer | THV | THV | THV | THV | THV | THV | THV | THV |
| | Softening point of sealer [°C] | 110 | 110 | 110 | 110 | 110 | 110 | 110 | 110 |

(continued)

| Test No. | | 36 | 37 | 38 | 39 | 40 | 41 | 42 | 43 |
|---|---|---|---|---|---|---|---|---|---|
| Solder material | Composition of solder material | Sn Ag Cu | Sn Ag Cu | Sn Ag Cu | Sn Ag Cu | Sn Ag Cu | Sn Ag Cu | Sn Ag Cu | Sn Ag Cu |
| | Melting point of solder material [°C] | 223 | 223 | 223 | 223 | 223 | 223 | 223 | 223 |
| Evaluation of heat shrinkable coupling component | Efficiency of heating of tube | C | B | B | A | A | A | A | A |
| | Visibility through tube | A | A | A | A | A | B | B | C |

As shown in Table 5, when the arithmetic average surface roughness Ra of the tubes was 0.10 μm 2.00 μm, the results of the evaluation of the tubes and the evaluation of the heat shrinkable coupling components were good. In No. 36 in which the arithmetic average roughness Ra was less than 0.10 μm, the transmittance of infrared light was high, and the efficiency of heating of the tube was low. In No. 43 in which the arithmetic average roughness Ra was more than 2.00 μm, scattering of visible light was large, and the visibility through the heat shrinkable tube was low when the state inside the heat shrinkable coupling component was checked.

<Test Example 6>

Heat shrinkable tubes Nos. 44 to 49 were produced in the same manner as that for No. 2 in Test Example 1 except that the amount of the coloring agent was controlled such that the transmittance of infrared light through the heat shrinkable tube obtained was a value shown in Table 6. Next, one of the heat shrinkable tubes shown in Table 6, a solder material (Pb 62.0% by mass and In: 38.0% by mass) having a melting point of 210°C, and a sealer (PVDF: 50% by mass and LLDPE: 50% by mass) having a softening point of 95°C were used to produce a heat shrinkable coupling component using the same process as in Test Example 2. The transmittance of infrared light having a center wavelength of 1 μm through each of the heat shrinkable tubes Nos. 44 to 49 in an infrared heating apparatus, the efficiency of infrared heating of the heat shrinkable tube determined in the same manner as in Test Example 5, and the efficiency of heating of the sealer in each heat shrinkable coupling component are shown in Table 6.

The efficiency of heating of the sealer was evaluated according to the following criteria.

A: The sealer can be heated and melted in a particularly short time to produce the heat shrinkable coupling component.
B: The sealer can be heated and melted in a short time to produce the heat shrinkable coupling component.
C: The sealer can be heated and melted to produce the heat shrinkable coupling component.
D: The sealer is not heated and melted sufficiently.

[Table 6]

| Test No. | | 44 | 45 | 46 | 47 | 48 | 49 |
|---|---|---|---|---|---|---|---|
| Base resin | Composition | ETFE | ETFE | ETFE | ETFE | ETFE | ETFE |
| | Fluorine content [% by mass] | 61 | 61 | 61 | 61 | 61 | 61 |
| Physical properties of tube | Melting point of tube [°C] | 225 | 225 | 225 | 225 | 225 | 225 |
| | Storage elastic modulus at 250°C to 280°C [MPa] | 1.1 | 1.1 | 1.1 | 1.1 | 1.1 | 1.1 |
| | Transmittance of infrared light [%] | 80.0 | 90.0 | 92.0 | 97.0 | 99.0 | 99.5 |

(continued)

| Test No. | | 44 | 45 | 46 | 47 | 48 | 49 |
|---|---|---|---|---|---|---|---|
| Sealer | Composition of sealer | PVDF LLDPE | PVDF LLDPE | PVDF LLDPE | PVDF LLDPE | PVDF LLDPE | PVDF LLDPE |
| | Softening point of sealer [°C] | 95 | 95 | 95 | 95 | 95 | 95 |
| Solder material | Composition of solder material | Pb In | Pb In | Pb In | Pb In | Pb In | Pb In |
| | Melting point of solder material [°C] | 210 | 210 | 210 | 210 | 210 | 210 |
| Evaluation of heat shrinkable coupling component | Efficiency of heating of tube | A | A | A | A | B | C |
| | Efficiency of heating of sealer | C | B | A | A | A | A |

As shown in Table 6, when the transmittance of infrared light having a wavelength of 1 $\mu$m through the tubes was 90.0% to 99.0%, the results of the evaluation of the efficiency of infrared heating of the heat shrinkable tubes and the results of the evaluation of the efficiency of heating of the sealer in the heat shrinkable coupling components were good. In No. 44 in which the transmittance of infrared light was less than 90.0%, the efficiency of heating of the sealer during heating of the heat shrinkable coupling component was low. Therefore, the sealer did not easily deform, and the heat shrinkable coupling component shrank slowly. In No. 49 in which the transmittance of infrared light was more than 99.0%, the efficiency of heating of the heat shrinkable tube during heating of the heat shrinkable coupling component was low, and the heat shrinkable tube did not easily shrink.

<Test Example 7>

First, heat shrinkable tubes Nos. 50 to 57 were produced in the same manner as that for No. 2 in Test Example 1. Next, a heat shrinkable coupling component was produced using one of the heat shrinkable tubes shown in Table 7, a solder material (Sn: 67.0% by mass, Pb: 32.0% by mass, and Cu: 1.0% by mass) having a melting point of 218°C, and a sealer (THV: 70% by mass and PVDF: 30% by mass) having a softening point of 160°C using the same process as in Test Example 2 except that the sealer was selected such that the transmittance of infrared light having a wavelength of 1 $\mu$m through the sealer was a value shown in Table 7. The transmittance of infrared light having a wavelength of 1 $\mu$m through each of the heat shrinkable coupling components Nos. 50 to 57 and the results of the evaluation of the performance of the heat shrinkable coupling component performed in the same manner as in Test Example 2 are shown in Table 7.
[Table 7]

| Test No. | | 50 | 51 | 52 | 53 | 54 | 55 | 56 | 57 |
|---|---|---|---|---|---|---|---|---|---|
| Base resin | Composition | ETFE | ETFE | ETFE | ETFE | ETFE | ETFE | ETFE | ETFE |
| | Fluorine content [% by mass] | 60 | 60 | 60 | 60 | 60 | 60 | 60 | 60 |
| Physical properties of tube | Melting point of tube [°C] | 225 | 225 | 225 | 225 | 225 | 225 | 225 | 225 |
| | Storage elastic modulus at 250°C to 280°C [MPa] | 0.8 | 0.8 | 0.8 | 0.8 | 0.8 | 0.8 | 0.8 | 0.8 |

(continued)

| Test No. | | 50 | 51 | 52 | 53 | 54 | 55 | 56 | 57 |
|---|---|---|---|---|---|---|---|---|---|
| Sealer | Composition of sealer | THV PVDF | THV PVDF | THV PVDF | THV PVDF | THV PVDF | THV PVDF | THV PVDF | THV PVDF |
| | Softening point of sealer [°C] | 160 | 160 | 160 | 160 | 160 | 160 | 160 | 160 |
| | Transmittance of infrared light through sealer [%] | 0.1 | 1.0 | 3.0 | 5.0 | 16.0 | 22.0 | 30.0 | 40.0 |
| Solder material | Composition of solder material | Sn Pb Cu | Sn Pb Cu | Sn Pb Cu | Sn Pb Cu | Sn Pb Cu | Sn Pb Cu | Sn Pb Cu | Sn Pb Cu |
| | Melting point of solder material [°C] | 218 | 218 | 218 | 218 | 218 | 218 | 218 | 218 |
| Evaluation of heat shrinkable coupling component | Leakage current test | C | B | A | A | A | A | B | C |

As shown in Table 7, when the transmittance of infrared light having a wavelength of 1 μm through the sealer in the heat shrinkable coupling components was 1.0% to 30.0%, the results of the evaluation of the performance of each heat shrinkable coupling component were good. In No. 50 in which the transmittance of infrared light through the sealer was less than 1.0%, the infrared heating proceeded rapidly, and therefore the sealer was rapidly softened. In this case, the sealing ability of the solder material was low, and the performance of the heat shrinkable coupling component deteriorated. In No. 57 in which the transmittance of infrared light through the sealer was more than 30.0%, the sealer was heated slowly and was not readily softened, so that the performance of the heat shrinkable coupling component deteriorated.

<Test Example 8>

First, heat shrinkable tubes Nos. 58 to 69 were produced in the same manner as that for No. 2 in Test Example 1. Next, one or a mixture of two or more of THV, PVDF, FKM, EVA, LLDPE, and HDPE was used as the sealer, and one or a mixture of two or more of Sn, Ag, Sb, Pb, Bi, and In was used as the solder material to produce a heat shrinkable coupling component. The sealer and the solder material were prepared such that the softening point of the sealer and the melting point of the solder material in the heat shrinkable coupling component were values shown in Table 8. The softening point of the sealer and the melting point of the solder material in each of the heat shrinkable coupling components Nos. 58 to 69 are shown in Table 8. The evaluation of the performance of the heat shrinkable coupling component is the same as the evaluation of the performance of the heat shrinkable coupling component in Test Example 2, and the evaluation results are shown in Table 8.

[Table 8]

| Test No. | | 58 | 59 | 60 | 61 | 62 | 63 | 64 | 65 | 66 | 67 | 68 | 69 |
|---|---|---|---|---|---|---|---|---|---|---|---|---|---|
| Base resin | Composition | ETFE | ETFE | ETFE | ETFE | ETFE | ETFE | ETFE | ETFE | ETFE | ETFE | ETFE | ETFE |
| | Fluorine content [% by mass] | 60 | 60 | 60 | 60 | 60 | 60 | 60 | 60 | 60 | 60 | 60 | 60 |
| Physical properties of tube | Melting point of tube [°C] | 225 | 225 | 225 | 225 | 225 | 225 | 225 | 225 | 225 | 225 | 225 | 225 |
| | Storage elastic modulus at 250°C to 280°C [MPa] | 0.8 | 0.8 | 0.8 | 0.8 | 0.8 | 0.8 | 0.8 | 0.8 | 0.8 | 0.8 | 0.8 | 0.8 |
| Sealer | Softening point of sealer [°C] | 55 | 55 | 80 | 80 | 100 | 110 | 140 | 150 | 170 | 210 | 170 | 210 |
| Solder material | Melting point of solder material [°C] | 185 | 210 | 185 | 210 | 220 | 220 | 230 | 230 | 240 | 240 | 260 | 260 |
| Evaluation of heat shrinkable coupling component | Leakage current test | C | C | C | B | B | A | A | B | B | C | C | C |

EP 4 299 284 B1

As shown in Table 8, in Nos. 61 to 66 in which the melting point of the solder material in the heat shrinkable coupling component was 210°C to 240°C and the softening point of the sealer was 80°C to 170°C, the results of the leakage current test were good. In No. 60 in which the melting point of the solder material was lower than 210°C, in No. 59 in which the softening point of the sealer was lower than 80°C, in No. 58 in which the melting point of the solder material was lower than 210°C and the softening point of the sealer was lower than 80°C, in No. 68 in which the melting point of the solder material was higher 240°C, in No. 67 in which the softening point of the sealer was higher than 170°C, and in No. 69 in which the melting point of the solder material was higher than 240°C and the softening point of the sealer was higher than 170°C, the pass rate of the leakage current test of the heat shrinkable coupling component was low.

<Test Example 9>

Heat shrinkable tubes Nos. 70 to 77 were produced in the same manner as that for No. 3 in Test Example 1. Next, one of the heat shrinkable tubes, a solder material (Sn: 96.0% by mass, Ag: 3.0% by mass, and Cu: 1.0% by mass) having a melting point of 223°C, and a sealer (THV + silica) including THV having a softening point of 110°C and silica in an amount shown in Table 9 were used to dispose a ring-shaped solder portion at a longitudinal central portion of a metal rod and ring-shaped sealing portions at opposite end portions. Next, a lead wire was disposed such that its end portion was positioned in the region of the solder portion, and the heat shrinkable tube was disposed on the outer circumferential surface of the resulting metal rod. Then a heat gun was used to apply hot air at 500°C to shrink the tube, and the solder portion and the sealing portions were thereby fixed. After cooling, the tube was removed from the metal rod, and a heat shrinkable coupling component was thereby produced. The length of the tube was 20 mm. The width of the sealer was 2 mm, and its thickness was 0.4 mm. The width of the solder material was 2.5 mm, and its thickness was 0.4 mm. The shear viscosity of the sealer was controlled by changing the amount of silica added. The shear viscosity at 250°C is shown in Table 9.

The performance of each heat shrinkable coupling component was evaluated by placing the heat shrinkable coupling component on exposed portions of ETFE electric wires from which their coating had been removed, shrinking the heat shrinkable coupling component, and applying a voltage in a solution to check whether a leakage current was equal to or smaller than a threshold value. To evaluate the heat resistance, the electric wires after the shrinkage were heated at 215°C for 750 hours, and then the leakage current was evaluated. The solution used for immersion was a solution containing 5% of NaCl and 0.5% of a surfactant, and a voltage of 1 kV was applied for 60 seconds to evaluate the leakage current. The results of the evaluation of the performance of the heat shrinkable coupling components are shown in Table 9.

The criteria for the evaluation of the heat shrinkable coupling components are shown below.

A: The pass rate of the leakage current test is 90% or more.
B: The pass rate of the leakage current test is 80% or more.
C: The pass rate of the leakage current test is 75% or more.
D: The pass rate of the leakage current test is less than 75%.

[Table 9]

| Test No. | | 70 | 71 | 72 | 73 | 74 | 75 | 76 | 77 |
|---|---|---|---|---|---|---|---|---|---|
| Base resin | Composition | ETFE | ETFE | ETFE | ETFE | ETFE | ETFE | ETFE | ETFE |
| | Fluorine content [% by mass] | 60 | 60 | 60 | 60 | 60 | 60 | 60 | 60 |
| Physical properties of tube | Melting point of tube [°C] | 225 | 225 | 225 | 225 | 225 | 225 | 225 | 225 |
| | Storage elastic modulus at 250°C to 280°C [MPa] | 1.0 | 1.0 | 1.0 | 1.0 | 1.0 | 1.0 | 1.0 | 1.0 |

(continued)

| Test No. | | 70 | 71 | 72 | 73 | 74 | 75 | 76 | 77 |
|---|---|---|---|---|---|---|---|---|---|
| Sealer | Composition of sealer | THV | THV | THV | THV | THV | THV | THV | THV |
| | Softening point of sealer [°C] | 110 | 110 | 110 | 110 | 110 | 110 | 110 | 110 |
| | Silica content [% by mass] | 0.2 | 1.0 | 1.5 | 2.5 | 3.0 | 3.5 | 4.0 | 5.0 |
| | Shear viscosity of sealer [Pa·s] Shear rate 100/s Temperature 250°C | 800 | 1000 | 1100 | 1300 | 1800 | 1900 | 2000 | 3000 |
| | Shear viscosity of sealer [Pa·s] Shear rate 0.01/s Temperature 250°C | 2000 | 3000 | 5000 | 7000 | 30000 | 35000 | 40000 | 60000 |
| Solder material | Composition of solder material | Sn Ag Cu | Sn Ag Cu | Sn Ag Cu | Sn Ag Cu | Sn Ag Cu | Sn Ag Cu | Sn Ag Cu | Sn Ag Cu |
| | Melting point of solder material [°C] | 223 | 223 | 223 | 223 | 223 | 223 | 223 | 223 |
| Evaluation of heat shrinkable coupling component | Leakage current test | C | B | A | A | A | A | B | C |

As shown in Table 9, when the shear viscosity of the sealer as 250°C and a shear rate of 100/s was 1000 Pa·s to 2000 Pa·s, the characteristics of the heat shrinkable coupling components obtained were good. In No. 70 in which the shear viscosity was lower than 1000 Pa·s, the sealer was softened during shrinkage of the hear shrinkable tube and easily changed in shape, and the sealing ability deteriorated, so that tha pass rate of the leakage current test of the heat shrinkable coupling component was low. In No. 77 in which the shear viscosity was higher than 2000 Pa·s, since the flowability of the sealer during shrinkage of the heat shrinkable tube was low, the effect of filling gaps was low, so that the pass rate of the leakage current test of the heat shrinkable coupling component was low.

<Test Example 10>

Heat shrinkable tubes Nos. 78 to 89 were produced in the same manner as that for No. 2 in Test Example 1 except that the raw materials of the ethylene-tetrafluoroethylene copolymer resin were selected such that the content of fluorine in the ethylene-tetrafluoroethylene copolymer was a value shown in Table 10 and that crosslinking was performed by electron beam irradiation under the condition of an irradiation dose of 80 kGy. Next, one of the heat shrinkable tubes, a solder material (Sn: 96.0% by mass, Ag: 3.0% by mass, and Cu: 1.0% by mass) having a melting point of 223°C, and a sealer having a softening point of 110°C and containing 70% by mass of THV, 30% by mass of FKM, and silica in an amount shown in the table were used to dispose a ring-shaped solder portion at a longitudinal central portion of a metal rod and ring-shaped sealing portions at opposite end portions. Next, a lead wire was disposed such that its end portion was positioned in the region of the solder portion, and the heat shrinkable tube was disposed on the outer circumferential surface of the resulting metal rod. Then a heat gun was used to apply hot air at 500°C to shrink the tube, and the solder portion and the sealing portions were thereby fixed. After cooling, the tube was removed from the metal rod, and a heat shrinkable coupling component was thereby produced. The length of the tube was 20 mm. The width of the sealer was 2 mm, and its thickness was 0.4 mm. The width of the solder material was 2.5 mm, and its thickness was 0.4 mm. The shear viscosity of the sealer was controlled by changing the amount of silica added. The shear viscosity at 215°C is shown in the table. The performance of each heat shrinkable coupling component was evaluated in the same manner as in Test Example 9.

[Table 10]

| Test No. | | 78 | 79 | 80 | 81 | 82 | 83 | 88 | 89 |
|---|---|---|---|---|---|---|---|---|---|
| Base resin | Composition | ETFE | ETFE | ETFE | ETFE | ETFE | ETFE | ETFE | ETFE |
| | Fluorine content [% by mass] | 59 | 59 | 59 | 59 | 59 | 59 | 59 | 59 |
| Physical properties of tube | Melting point of tube [°C] | 235 | 235 | 235 | 235 | 235 | 235 | 235 | 235 |
| | Storage elastic modulus at 250°C to 280°C [MPa] | 1.2 | 1.2 | 1.2 | 1.2 | 1.2 | 1.2 | 1.2 | 1.2 |
| Sealer | Composition of sealer | THV FKM | THV FKM | THV FKM | THV FKM | THV FKM | THV FKM | THV FKM | THV FKM |
| | Softening point of sealer [°C] | 115 | 115 | 115 | 115 | 115 | 115 | 115 | 115 |
| | Silica content [% by mass] | 0.2 | 1.0 | 1.5 | 2.5 | 3.0 | 3.5 | 4.0 | 5.0 |
| | Shear viscosity of sealer [Pa·s] Shear rate 100/s Temperature 215°C | 1200 | 1500 | 1600 | 1800 | 2300 | 2400 | 2500 | 3500 |
| | Shear viscosity of sealer [Pa·s] Shear rate 0.01/s Temperature 215°C | 5000 | 7000 | 10000 | 15000 | 50000 | 60000 | 70000 | 100000 |
| Solder material | Composition of solder material | Sn Ag Cu | Sn Ag Cu | Sn Ag Cu | Sn Ag Cu | Sn Ag Cu | Sn Ag Cu | Sn Ag Cu | Sn Ag Cu |
| | Melting point of solder material [°C] | 223 | 223 | 223 | 223 | 223 | 223 | 223 | 223 |
| Evaluation of heat shrinkable coupling component | Leakage current test | C | B | A | A | A | A | B | C |

As shown in Table 10, when the shear viscosity of the sealer at 215°C and a shear rate of 0.01/s was 7000 Pa·s to 70000 Pa·s, the results for the sealing ability of the heat shrinkable coupling components were good. In No. 78 in which the shear viscosity was less than 7000Pa·s, the sealer flowed easily during the storage of the heat shrinkable coupling component at high temperature for a long time, and the pass rate of the leakage current test was low. In No. 89 in which the shear viscosity was higher than 70000 Pa·s, since the flowability was low, the effect of filling gaps was low. In this case, the sealing ability deteriorated, and the pass rate of the leakage current test was low.

<Test Example 11>

Heat shrinkable tubes Nos. 90 to 95 were produced in the same manner as that for No. 2 in Test Example 1. Next, one of the heat shrinkable tubes, a solder material (Sn: 96.0% by mass, Ag: 3.0% by mass, and Cu: 1.0% by mass) having a melting point of 223°C, and a sealer (EVA, PVDF, THV) shown in Table 11 were used to produce one of heat shrinkable coupling components Nos. 90 to 95 in the same manner as in Test Example 9. The melting point of the sealer was controlled by changing the types of resins and adjusting their ratio. The melting point of the sealer in each of the heat shrinkable tubes Nos. 90 to 95 and the results of the evaluation of the performance of each heat shrinkable coupling component performed in the same manner as in Test Example 9 are shown in Table 11.

[Table 11]

| Test No. | | 90 | 91 | 92 | 93 | 94 | 95 |
|---|---|---|---|---|---|---|---|
| Base resin | Composition | ETFE | ETFE | ETFE | ETFE | ETFE | ETFE |
| | Fluorine content [% by mass] | 60 | 60 | 60 | 60 | 60 | 60 |
| Physical properties of tube | Melting point of tube [°C] | 225 | 225 | 225 | 225 | 225 | 225 |
| | Storage elastic modulus at 250°C to 280°C [MPa] | 0.8 | 0.8 | 0.8 | 0.8 | 0.8 | 0.8 |
| Sealer | Composition of sealer | PVDF EVA | PVDF EVA | PVDF EVA | PVDF THV | PVDF THV | PVDF THV |
| | Melting point of sealer [°C] | 100 | 110 | 120 | 160 | 170 | 180 |
| Solder material | Composition of solder material | Sn Ag Cu | Sn Ag Cu | Sn Ag Cu | Sn Ag Cu | Sn Ag Cu | Sn Ag Cu |
| | Melting point of solder material [°C] | 223 | 223 | 223 | 223 | 223 | 223 |
| Evaluation of heat shrinkable coupling component | Leakage current test | C | B | A | A | B | C |

As shown in Table 11, in the heat shrinkable coupling components Nos. 91 to 94 in which the melting point of the sealer was 110°C to 170°C, the characteristics of the heat shrinkable coupling components obtained were good. In No. 90 in which the melting point was lower than 110°C, the sealer was soft during shrinkage of the heat shrinkable tube and easily deformed. In this case, the sealing ability deteriorated, and the pass rate of the leakage current test on the heat shrinkable coupling component was low. Moreover, the sealer flowed easily during storage at high temperature for a long time, and the sealing ability was unlikely to be maintained, so that the pass rate of the leakage current test on the heat shrinkable coupling component was low. In No. 95 in which the melting point was higher than 170°C, the flowability during shrinkage of the heat shrinkable tube was low, and the effect of filling gaps was low. In this case, the sealing ability deteriorated, and the pass rate of the leakage current test on the heat shrinkable coupling component was low.

<Test Example 12>

The tubes Nos. 2 to 7 in Test Example 1 were used to produce heat shrinkable coupling components Nos. 96 to 103. Next, one of the heat shrinkable tubes and a sealer having a softening point of 110°C and containing 70% by mass of THV, 30% by mass of FKM, and silica in an amount shown in Table 12 were used to fix ring-shaped sealing portions on longitudinal end portions of a metal rod. Next, the heat shrinkable tube was disposed on the outer circumferential surface of the resulting metal rod. Then a heat gun was used to apply hot air at 500°C to shrink the tube, and the sealing portions were thereby fixed. After cooling, the tube was removed from the metal rod. Heat shrinkable coupling components Nos. 96 to 103 were thereby produced. The length of each tube was 30 mm. The width of the sealer was 2 mm, and its thickness was 0.4 mm. The shear viscosity was controlled by changing the amount of silica added. The shear viscosities at 250°C and 215°C are shown in Table 12.

The performance of each heat shrinkable coupling component was evaluated as follows. A crimp sleeve and the heat shrinkable coupling component were disposed on exposed portions of ETFE electric wires from which the coating had been removed. A lead wire was disposed such that its end portion was positioned in the exposed portions, and the crimp sleeve was crimped and fixed using a crimp tool. Then the heat shrinkable coupling component was heated and shrunk, and a voltage was applied in a solution to check whether a leakage current was equal to or smaller than a threshold value. The crimp sleeve used was prepared by plating a copper substrate with nickel to a thickness of 8 $\mu$m, and the length of the crimp sleeve was 15 mm. To evaluate the heat resistance, the electric wires after the shrinkage were heated at 215°C for 750 hours, and then the leakage current was evaluated. The solution used for immersion was a solution containing 5% of NaCl and 0.5% of a surfactant, and a voltage of 1 kV was applied for 60 seconds to evaluate the leakage current. The results of the evaluation of the performance of each heat shrinkable coupling component are shown in Table 12.

The criteria for the evaluation of the heat shrinkable coupling component are shown below.

A: The pass rate of the leakage current test is 90% or more.
B: The pass rate of the leakage current test is 80% or more.
C: The pass rate of the leakage current test is 75% or more.
D: The pass rate of the leakage current test is less than 75%.

[Table 12]

| Test No. | | 96 | 97 | 98 | 99 | 100 | 101 | 102 | 103 |
|---|---|---|---|---|---|---|---|---|---|
| Base resin | Composition | ETFE | ETFE | ETFE | ETFE | ETFE | ETFE | ETFE | ETFE |
| | Fluorine content [% by mass] | 60 | 60 | 60 | 60 | 60 | 60 | 60 | 60 |
| Physical properties of tube | Melting point of tube [°C] | 225 | 225 | 225 | 225 | 225 | 225 | 225 | 225 |
| | Storage elastic modulus at 250°C to 280°C [MPa] | 0.8 | 1.0 | 1.2 | 1.6 | 2.0 | 2.8 | 1.0 | 1.0 |

(continued)

| Test No. | | 96 | 97 | 98 | 99 | 100 | 101 | 102 | 103 |
|---|---|---|---|---|---|---|---|---|---|
| Sealer | Composition of sealer | THV FKM | THV FKM | THV FKM | THV FKM | THV FKM | THV FKM | THV FKM | THV FKM |
| | Softening point of sealer [°C] | 110 | 110 | 110 | 110 | 110 | 110 | 110 | 110 |
| | Silica content [parts by mass based on 100 parts by mass of resin] | 1.5 | 1.5 | 1.5 | 1.5 | 1.5 | 1.5 | 0.8 | 3.5 |
| | Shear viscosity of sealer [Pa·s] Shear rate 100/s Temperature 250°C | 1200 | 1200 | 1200 | 1200 | 1200 | 1200 | 1000 | 2000 |
| | Shear viscosity of sealer [Pa·s] Shear rate 0.01/s Temperature 215°C | 13000 | 13000 | 13000 | 13000 | 13000 | 13000 | 7000 | 70000 |
| Crimp sleeve | Material of crimp sleeve | Cu | Cu | Cu | Cu | Cu | Cu | Cu | Cu |
| | Surface treatment for crimp sleeve | Ni plating | Ni plating | Ni plating | Ni plating | Ni plating | Ni plating | Ni plating | Ni plating |
| Evaluation of heat shrinkable coupling component | Sealing performance of heat shrinkable coupling component | B | B | A | A | B | B | B | B |

As shown in Table 12, in each of the heat shrinkable coupling components Nos. 96 to 103, the storage elastic modulus as 250°C to 280°C of the heat shrinkable tube was 0.8 MPa to 2.8 MPa. Moreover, the shear viscosity of the sealer at 250°C and a shear rate of 100/s was 1000 Pa·s to 2000 Pa·s, and the shear viscosity of the sealer at 215°C and a shear rate of 0.01/s was 7000 Pa·s to 70000 Pa·s. In this case, the sealing ability obtained was good.

<Test Example 13>

In Test Example 13, heat shrinkable tubes to which an inorganic material was added as an additive were evaluated. Heat shrinkable tubes Nos. 104 to 110 were produced in the same manner as that for No. 2 in Test Example 1 except that an inorganic material shown in Table 13 was mixed. For each of the heat shrinkable tubes Nos. 104 to 110, in addition to the expansion performance and the shrinkage performance in Test Example 1, the strength of the tube and facility contamination were evaluated. The evaluation results are shown in Table 13.
The strength and facility contamination were evaluated by the following methods.

(1) Strength

The strength was measured by a tensile test using a tensile speed of 50 mm/minute according to ASTM D-638. The strength was evaluated according to the following criteria.

A: Particularly good.
B: Good.

(2) Facility contamination

In the facility contamination evaluation, the facility after manufacturing of the heat shrinkable tube was evaluated according to the following criteria.

A: No contamination was found.
B: Slight contamination was found.
C: A little contamination was found.
D: Significant contamination was found.

[Table 13]

| Test No. | | 104 | 105 | 106 | 107 | 108 | 109 | 110 |
|---|---|---|---|---|---|---|---|---|
| Base resin | Composition | ETFE | ETFE | ETFE | ETFE | ETFE | ETFE | ETFE |
| | Fluorine content [% by mass] | 60 | 60 | 60 | 60 | 60 | 60 | 60 |
| Physical properties of tube | Melting point of tube [°C] | 225 | 225 | 225 | 225 | 225 | 225 | 225 |
| | Storage elastic modulus at 250°C to 280°C [MPa] | 0.8 | 0.8 | 0.8 | 0.8 | 0.8 | 0.8 | 0.8 |
| Inorganic material | Type | - | $Al_2O_3$ | $Al_2O_3$ | $Al_2O_3$ | $Al_2O_3$ | $SiO_2$ | $SiO_2$ |
| | Average particle diameter [$\mu$m] | - | 1.0 | 1.0 | 1.0 | 1.0 | 0.01 | 0.01 |
| | Content (% by mass) | 0.0 | 0.2 | 0.5 | 1.0 | 3.0 | 5.0 | 1.0 |
| Evaluation of tube | Expansion characteristics | C | C | C | C | C | C | C |
| | Shrinkage characteristics | C | C | C | C | C | C | C |
| | Strength | B | A | A | A | B | B | A |
| Facility contamination | | A | B | B | B | C | C | B |

As can be seen from Table 13, when the content of the inorganic material is 1% by mass or less, the expansion characteristics, shrinkage characteristics, and strength of the hear shrinkable tube can be well maintained, and the facility contamination can be reduced.

As can be seen from the above results, these hear shrinkable tubes used for the heat shrinkable coupling components for high heat resistance insulated wires have good heat resistance and good heat shrinkage performance.
Reference Signs List

1 heat shrinkable tube
2 solder portion
3 sealing portion
5 conductor coupling portion
6, 16 conductor
7, 17 insulating layer
8, 18 insulated wire
11 heat shrinkable tube after shrinkage
12 solder portion after melting

13 sealing portion after melting
23 strands of grounding insulated wire
24 insulating layer of grounding insulated wire
25 grounding insulated wire
27 braid
28 crimp sleeve
40, 50, 51, 53, 54 heat shrinkable coupling component
100 electric wire bundle after coupling

**Claims**

1. A heat shrinkable tube (1) comprising an ethylene-tetrafluoroethylene copolymer as a main component, the main component being a component contained in an amount of 95% by mass or more with respect to the total mass of the heat shrinkable tube (1) and contained in an amount of 98% by mass or more with respect to the total mass of resin components,

   wherein the heat shrinkable tube (1) has a melting point of 210°C to 250°C and a storage elastic modulus of 0.8 MPa to 2.8 MPa at 250°C to 280°C,
   wherein the content of fluorine in the ethylene-tetrafluoroethylene copolymer is 58% by mass to 62% by mass, and
   wherein the ratio n/m of the number n of tetrafluoroethylene units to the number m of ethylene units in the ethylene-tetrafluoroethylene copolymer is 1.02 to 1.20.

2. The heat shrinkable tube according to claim 1, wherein the heat shrinkable tube has a storage elastic modulus of 500 MPa to 900 MPa at 25°C.

3. The heat shrinkable tube (1) according to claim 1 or claim 2, wherein the heat shrinkable tube (1) has a surface having an arithmetic average roughness Ra of 0.10 μm 2.00 μm.

4. The heat shrinkable tube (1) according to any one of claims 1 to 3, wherein the transmittance of infrared light having a wavelength of 1 μm through the heat shrinkable tube (1) is 90.0% to 99.0%.

5. A heat shrinkable coupling component (40, 50, 51, 53, 54) used to couple insulated wires (18) each including a strand covered with an insulating layer (7, 17),
   the heat shrinkable coupling component (40, 50, 51, 53, 54) comprising:

   the heat shrinkable tube (1) according to any one of claims 1 to 4; and
   a pair of sealing portions (3) disposed on an inner circumferential surface of the heat shrinkable tube (1) at respective positions on opposite end side.

6. The heat shrinkable coupling component (40, 50, 51, 53, 54) according to claim 5,
   wherein the sealing portions are formed of a sealer, and the shear viscosity of the sealer at 250°C and a shear rate of 100/s is 1000 Pa·s to 2000 Pa·s.

7. The heat shrinkable coupling component (40, 50, 51, 53, 54) according to claim 5 or 6, wherein the sealing portions (3) are formed of a sealer, and the shear viscosity of the sealer at 215°C and a shear rate of 0.01/s is 7000 Pa·s to 70000 Pa·s.

8. The heat shrinkable coupling component (40, 50, 51, 53, 54) according to claim 6 or 7, further comprising a solder portion (2) disposed on the inner circumferential surface of the heat shrinkable tube (1) at a position between the pair of sealing portions (3).

9. The heat shrinkable coupling component (40, 50, 51, 53, 54) according to claim 8, wherein the solder portion (2) is formed of a solder material, and the solder material has a melting point of 210°C to 240°C, and
   wherein the sealer has a softening point of 80°C to 170°C.

10. The heat shrinkable coupling component (40, 50, 51, 53, 54) according to claim 9, wherein the sealer has a melting point of 110°C to 170°C.

11. The heat shrinkable coupling component (40, 50, 51, 53, 54) according to any one of claims 6 to 10, wherein the transmittance of infrared light having a wavelength of 1 μm through the sealer is 1.0% to 30.0%.

12. A method of manufacturing a heat shrinkable tube (1), the method comprising:

subjecting a resin composition containing an ethylene-tetrafluoroethylene copolymer as a main component to extrusion molding into a tube, the main component being a component contained in an amount of 95% by mass or more with respect to the total mass of the resin composition and contained in an amount of 98% by mass or more with respect to the total mass of resin components;
crosslinking, by irradiation, the tube formed by the extrusion molding;
after the crosslinking, heating the tube at a temperature of 250°C to 280°C; and
expanding the tube by increasing the pressure inside the tube to a pressure higher by at least 50 kPa than the pressure outside the tube to thereby obtain a heat shrinkable tube (1),
wherein the heat shrinkable tube (1) has a storage elastic modulus of 0.8 MPa to 2.8 MPa at 250°C to 280°C and has a melting point of 210°C to 250°C,
wherein the content of fluorine in the ethylene-tetrafluoroethylene copolymer is 58% by mass to 62% by mass, and
wherein the ratio n/m of the number n of tetrafluoroethylene units to the number m of ethylene units in the ethylene-tetrafluoroethylene copolymer is 1.02 to 1.20.

13. A method of manufacturing a heat shrinkable coupling component (40, 50, 51, 53, 54), the method comprising:

disposing sealing portions (3) on an inner circumferential surface of the heat shrinkable tube (1) according to any one of claims 1 to 4 at respective positions on opposite end sides; and
fixing the sealing portions (3) by shrinking the heat shrinkable tube (1),
wherein the sealing portions (3) are formed of a sealer, and the sealer has a softening point of 80°C to 170°C.

## Patentansprüche

1. Wärmeschrumpfbarer Schlauch (1), der ein Ethylen-Tetrafluorethylen-Copolymer als Hauptkomponente aufweist, wobei die Hauptkomponente in einem Anteil von 95 Massenprozent oder mehr, bezogen auf die Gesamtmasse des wärmeschrumpfbaren Schlauchs (1), und in einem Anteil von 98 Massenprozent oder mehr, bezogen auf die Gesamtmasse von Harzkomponenten, enthalten ist,

wobei der wärmeschrumpfbare Schlauch (1) einen Schmelzpunkt von 210 °C bis 250 °C und einen Lagerungselastizitätsmodul von 0,8 MPa bis 2,8 MPa bei 250 °C bis 280 °C aufweist,
wobei der Fluorgehalt im Ethylen-Tetrafluorethylen-Copolymer 58 Massenprozent bis 62 Massenprozent beträgt, und
wobei das Verhältnis n/m der Anzahl n der Tetrafluorethylen-Einheiten zur Anzahl m der Ethylen-Einheiten im Ethylen-Tetrafluorethylen-Copolymer 1,02 bis 1,20 beträgt.

2. Wärmeschrumpfbarer Schlauch nach Anspruch 1, wobei der wärmeschrumpfbare Schlauch einen Lagerungsmodul von 500 MPa bis 900 MPa bei 25 °C aufweist.

3. Wärmeschrumpfbarer Schlauch (1) nach Anspruch 1 oder Anspruch 2, wobei der wärmeschrumpfbare Schlauch (1) eine Oberfläche mit einer arithmetischen mittleren Rauheit Ra von 0,10 μm bis 2,00 μm aufweist.

4. Wärmeschrumpfbarer Schlauch (1) nach einem der Ansprüche 1 bis 3, wobei die Durchlässigkeit von Infrarotlicht mit einer Wellenlänge von 1 μm durch den wärmeschrumpfbaren Schlauch (1) 90,0 % bis 99,0 % beträgt.

5. Wärmeschrumpfbare Kopplungskomponente (40, 50, 51, 53, 54) zur Verbindung von isolierten Drähten (18), die jeweils einen mit einer Isolierschicht (7, 17) ummantelten Strang aufweisen, wobei die wärmeschrumpfbare Kopplungskomponente (40, 50, 51, 53, 54) aufweist:

den wärmeschrumpfbaren Schlauch (1) gemäß einem der Ansprüche 1 bis 4; und

zwei als Paar vorgesehene Dichtungsabschnitte (3), die an einer inneren Umfangsfläche des wärmeschrumpfbaren Schlauchs (1) an jeweiligen Positionen an gegenüberliegenden Endseiten angeordnet sind.

6. Wärmeschrumpfbare Kupplungskomponente (40, 50, 51, 53, 54) nach Anspruch 5,
wobei die Dichtungsabschnitte aus einem Dichtungsmittel gebildet sind und die Scherviskosität des Dichtungsmittels bei 250 °C und einer Schergeschwindigkeit von 100 s$^{-1}$ 1000 Pa·s bis 2000 Pa·s beträgt.

7. Wärmeschrumpfbare Kupplungskomponente (40, 50, 51, 53, 54) nach Anspruch 5 oder 6,
wobei die Dichtungsabschnitte (3) aus einem Dichtungsmittel gebildet sind und die Scherviskosität des Dichtungsmittels bei 215 °C und einer Schergeschwindigkeit von 0,01/s 7000 Pa·s bis 70000 Pa·s beträgt.

8. Wärmeschrumpfbare Kopplungskomponente (40, 50, 51, 53, 54) nach Anspruch 6 oder 7, die ferner einen Lötabschnitt (2) aufweist, der an der Innenumfangsfläche des wärmeschrumpfbaren Schlauchs (1) an einer Position zwischen den beiden Dichtungsabschnitten (3) angeordnet ist.

9. Wärmeschrumpfbare Kupplungskomponente (40, 50, 51, 53, 54) nach Anspruch 8,

wobei der Lötabschnitt (2) aus einem Lötmaterial gebildet ist und das Lötmaterial einen Schmelzpunkt von 210 °C bis 240 °C aufweist, und
wobei das Dichtungsmittel einen Erweichungspunkt von 80 °C bis 170 °C aufweist.

10. Wärmeschrumpfbare Kupplungskomponente (40, 50, 51, 53, 54) nach Anspruch 9,
wobei das Dichtungsmittel einen Schmelzpunkt von 110 °C bis 170 °C aufweist.

11. Wärmeschrumpfbare Kupplungskomponente (40, 50, 51, 53, 54) nach einem der Ansprüche 6 bis 10, wobei die Durchlässigkeit von Infrarotlicht mit einer Wellenlänge von 1 μm durch das Dichtungsmittel 1,0 % bis 30,0 % beträgt.

12. Verfahren zur Herstellung eines wärmeschrumpfbaren Schlauchs (1), wobei das Verfahren umfasst:

Ausführen eines Extrusionsformens an einer Harzzusammensetzung, die ein Ethylen-Tetrafluorethylen-Copolymer als Hauptkomponente enthält, um einen Schlauch zu bilden,
wobei die Hauptkomponente eine Komponente ist, die mit einem Anteil von 95 Massenprozent oder mehr, bezogen auf die Gesamtmasse der Harzzusammensetzung, und mit einem Anteil von 98 Massenprozent oder mehr, bezogen auf die Gesamtmasse der Harzkomponenten, enthalten ist;
Vernetzen des durch das Extrusionsformen gebildeten Schlauchs durch Bestrahlung;
Erhitzen des Schlauchs nach der Vernetzung auf eine Temperatur von 250 °C bis 280 °C; und
Ausdehnen des Schlauchs durch Erhöhen des Drucks im Inneren des Schlauchs auf einen Druck, der um mindestens 50 kPa höher ist als der Druck außerhalb des Schlauchs, um dadurch einen wärmeschrumpfbaren Schlauch (1) zu erhalten,
wobei der wärmeschrumpfbare Schlauch (1) einen Lagerungsmodul von 0,8 MPa bis 2,8 MPa bei 250 °C bis 280 °C und einen Schmelzpunkt von 210 °C bis 250 °C aufweist,
wobei der Fluorgehalt im Ethylen-Tetrafluorethylen-Copolymer 58 Massenprozent bis 62 Massenprozent beträgt, und
wobei das Verhältnis n/m der Anzahl n der Tetrafluorethylen-Einheiten zur Anzahl m der Ethylen-Einheiten im Ethylen-Tetrafluorethylen-Copolymer 1,02 bis 1,20 beträgt.

13. Verfahren zur Herstellung einer wärmeschrumpfbaren Kopplungskomponente (40, 50, 51, 53, 54), wobei das Verfahren umfasst:

Anordnen von Dichtungsabschnitten (3) an einer inneren Umfangsfläche des wärmeschrumpfbaren Schlauchs (1) gemäß einem der Ansprüche 1 bis 4 an jeweiligen Positionen an gegenüberliegenden Endseiten; und
Fixieren der Dichtungsabschnitte (3) durch Schrumpfen des wärmeschrumpfbaren Schlauchs (1),
wobei die Dichtungsabschnitte (3) aus einem Dichtungsmittel gebildet sind und das Dichtungsmittel einen Erweichungspunkt von 80 °C bis 170 °C aufweist.

**Revendications**

1. Tube thermorétractable (1) comprenant un copolymère d'éthylène-tétrafluoroéthylène en tant que composant principal, le composant principal étant un composant contenu en une quantité de 95 % en masse ou plus par rapport à la masse totale du tube thermorétractable (1) et contenu en une quantité de 98 % en masse ou plus par rapport à la masse totale des composants de résine,

   lequel tube thermorétractable (1) a un point de fusion de 210°C à 250°C et un module de conservation de 0,8 MPa à 2,8 MPa à une température de 250°C à 280°C,
   dans lequel la teneur en fluor du copolymère d'éthylène-tétrafluoroéthylène est de 58 % en masse à 62 % en masse, et
   dans lequel le rapport n/m du nombre n de motifs tétrafluoroéthylène au nombre m de motifs éthylène dans le copolymère d'éthylène-tétrafluoroéthylène est de 1,02 à 1,20.

2. Tube thermorétractable selon la revendication 1, lequel tube thermorétractable a un module de conservation de 500 MPa à 900 MPa à 25°C.

3. Tube thermorétractable (1) selon la revendication 1 ou la revendication 2, lequel tube thermorétractable (1) a une surface présentant une rugosité moyenne arithmétique Ra de 0,10 $\mu$m à 2,00 $\mu$m.

4. Tube thermorétractable (1) selon l'une quelconque des revendications 1 à 3, dans lequel le coefficient de transmission d'une lumière infrarouge ayant une longueur d'onde de 1 $\mu$m à travers le tube thermorétractable (1) est de 90,0 % à 99,0 %.

5. Composant de couplage thermorétractable (40, 50, 51, 53, 54) utilisé pour coupler des fils isolés (18) contenant chacun un brin recouvert d'une couche isolante (7, 17), le composant de couplage thermorétractable (40, 50, 51, 53, 54) comprenant :

   le tube thermorétractable (1) selon l'une quelconque des revendications 1 à 4 ; et
   une paire de parties de scellement (3) disposées sur une surface circonférentielle intérieure du tube thermorétractable (1) à des positions respectives sur des côtés d'extrémité opposés.

6. Composant de couplage thermorétractable (40, 50, 51, 53, 54) selon la revendication 5, dans lequel les parties de scellement sont formées d'un scellant, et la viscosité de cisaillement du scellant à 250°C et à une vitesse de cisaillement de 100/s est de 1 000 Pa·s à 2 000 Pa·s.

7. Composant de couplage thermorétractable (40, 50, 51, 53, 54) selon la revendication 5 ou 6, dans lequel les parties de scellement (3) sont formées d'un scellant, et la viscosité de cisaillement du scellant à 215°C et à une vitesse de cisaillement de 0,01/s est de 7 000 Pa·s à 70 000 Pa·s.

8. Composant de couplage thermorétractable (40, 50, 51, 53, 54) selon la revendication 6 ou 7, comprenant en outre une partie de brasure (2) disposée sur la surface circonférentielle intérieure du tube thermorétractable (1) à une position entre la paire de parties de scellement (3).

9. Composant de couplage thermorétractable (40, 50, 51, 53, 54) selon la revendication 8, dans lequel la partie de brasure (2) est formée d'un matériau de brasure, et le matériau de brasure a un point de fusion de 210°C à 240°C, et dans lequel le scellant a un point de ramollissement de 80°C à 170°C.

10. Composant de couplage thermorétractable (40, 50, 51, 53, 54) selon la revendication 9, dans lequel le scellant a un point de fusion de 110°C à 170°C.

11. Composant de couplage thermorétractable (40, 50, 51, 53, 54) selon l'une quelconque des revendications 6 à 10, dans lequel le coefficient de transmission d'une lumière infrarouge ayant une longueur d'onde de 1 $\mu$m à travers le scellant est de 1,0 % à 30,0 %.

12. Procédé de fabrication d'un tube thermorétractable (1), le procédé comprenant :

   la soumission d'une composition de résine contenant un copolymère d'éthylène-tétrafluoroéthylène en tant que composant principal à un moulage par extrusion en un tube, le composant principal étant un composant contenu en une quantité de 95 % en masse ou plus par rapport à la masse totale de la composition de résine et contenu en une quantité de 98 % en masse ou plus par rapport à la masse totale des composants de résine ;

la réticulation par irradiation du tube formé par le moulage par extrusion ;

après la réticulation, le chauffage du tube à une température de 250°C à 280°C ; et

l'expansion du tube par augmentation de la pression à l'intérieur du tube jusqu'à une pression supérieure d'au moins 50 kPa à la pression à l'extérieur du tube pour que soit ainsi obtenu un tube thermorétractable (1),

dans lequel le tube thermorétractable (1) a un module de conservation de 0,8 MPa à 2,8 MPa à une température de 250°C à 280°C et a un point de fusion de 210°C à 250°C,

dans lequel la teneur en fluor du copolymère d'éthylène-tétrafluoroéthylène est de 58 % en masse à 62 % en masse, et

dans lequel le rapport n/m du nombre n de motifs tétrafluoroéthylène au nombre m de motifs éthylène dans le copolymère d'éthylène-tétrafluoroéthylène est de 1,02 à 1,20.

13. Procédé de fabrication d'un composant de couplage thermorétractable (40, 50, 51, 53, 54), le procédé comprenant :

la disposition de parties de scellement (3) sur une surface circonférentielle intérieure du tube thermorétractable (1) selon l'une quelconque des revendications 1 à 4 à des positions respectives sur des côtés d'extrémité opposés ; et

la fixation des parties de scellement (3) par retrait du tube thermorétractable (1),

dans lequel les parties de scellement (3) sont formées d'un scellant, et le scellant a un point de ramollissement de 80°C à 170°C.

**FIG. 1**

**FIG. 2**

**FIG. 3**

**FIG. 4**

**FIG. 5**

**FIG. 6**

## FIG. 7

## FIG. 8

**FIG. 9**

**FIG. 10**

# FIG. 11

**EP 4 299 284 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021027985 A
- EP 3715115 A1
- WO 2010038800 A